(19) **Europäisches Patentamt / European Patent Office / Office européen des brevets**

(11) **EP 3 471 947 B1**

(12) **FASCICULE DE BREVET EUROPEEN**

(45) Date de publication et mention
de la délivrance du brevet:
**19.02.2020 Bulletin 2020/08**

(21) Numéro de dépôt: **17727246.5**

(22) Date de dépôt: **05.06.2017**

(51) Int Cl.:
**B29C 64/118** *(2017.01)* **B33Y 80/00** *(2015.01)*
**B33Y 10/00** *(2015.01)* **B33Y 30/00** *(2015.01)*
**B29C 64/336** *(2017.01)* B29L 31/34 *(2006.01)*

(86) Numéro de dépôt international:
**PCT/EP2017/063606**

(87) Numéro de publication internationale:
**WO 2017/215971 (21.12.2017 Gazette 2017/51)**

(54) **PROCÉDÉ ET APPAREIL POUR LA FABRICATION D'UN SYSTÈME MÉCATRONIQUE PAR IMPRESSION TRIDIMENSIONNELLE**

VERFAHREN UND VORRICHTUNG ZUR HERSTELLUNG EINES MECHATRONISCHEN SYSTEMS DURCH DREIDIMENSIONALES DRUCKEN

PROCESS AND APPARATUS FOR MANUFACTURING A MECATRONIC SYSTEM BY THREE-DIMENSIONAL PRINTING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2016 FR 1655552**

(43) Date de publication de la demande:
**24.04.2019 Bulletin 2019/17**

(73) Titulaires:
• **Centre National de la Recherche Scientifique**
**75016 Paris (FR)**
• **Université Paris-Sud**
**91405 Orsay (FR)**

(72) Inventeurs:
• **AMMI, Mehdi**
**91300 Massy (FR)**
• **LONGNOS, Florian**
**17137 Nieul Sur Mer (FR)**

(74) Mandataire: **Priori, Enrico**
**Marks & Clerk France**
**Immeuble "Visium"**
**22, avenue Aristide Briand**
**94117 Arcueil Cedex (FR)**

(56) Documents cités:
**WO-A2-2014/209994 US-A1- 2010 021 580**
**US-A1- 2015 173 203 US-A1- 2016 151 978**

• **The Xack: "Bed auto leveling (capacitive) + E3D Hotend (RepRapPro Mendel)", YouTube, 27 juillet 2014 (2014-07-27), pages 1-1, XP054976544, Extrait de l'Internet: URL:https://www.youtube.com/watch?v=MjDHa B O7zic [extrait le 2016-05-20]**
• **Simon J. Leigh etal.: "a simple, low cost conductive composite material for 3D printing of electronic sensors", , 21 novembre 2012 (2012-11-21), XP002772504, Extrait de l'Internet: URL:https://doi.org/10.1371/journal.pone.0 049365 [extrait le 2017-07-19] cité dans la demande**

**Description**

L'invention porte sur un procédé de fabrication d'un système mécatronique, ainsi que sur un appareil de fabrication adapté pour mettre en œuvre un tel procédé. L'invention se base sur des techniques d'impression tridimensionnelle (3D), dite aussi fabrication additive. Elle se prête à de très nombreuses applications, comme par exemple la fabrication de :

- capteurs physiologiques ou d'activité portables (de rythme cardiaque, glycémie...) ;
- dispositifs de rééducation ;
- interfaces d'interaction bi- ou tridimensionnelles ;
- objets connectés ;
- etc.

Aujourd'hui, les techniques de fabrication additive (ou impression 3D) connaissent un essor important dans différents domaines et s'apprêtent à révolutionner le secteur industriel, mais également le mode de consommation des particuliers. Différents procédés ont été mis au point ces dernières années afin de concevoir une grande variété d'objets et structures mécaniques. Ils permettent de contrôler les propriétés mécaniques locales ou globales ou encore l'apparence des objets (ex. couleur ou texture). Ces procédés ne produisent toutefois que des objets passifs, sans capacités de percevoir ou d'agir sur l'environnement.

Pour rendre ces objets actifs, il faut y intégrer des composants et fonctions électroniques, qui à l'heure actuelle sont fabriqués séparément, par des méthodes essentiellement soustractives, puis assemblés avec une structure mécanique dans des chaînes industrielles pour la réalisation d'un objet final. L'intégration de fonctions électroniques au sein d'une structure mécanique non-planaire et sans assemblage est un défi.

Ces dernières années, de nombreux acteurs se sont intéressés à l'utilisation de matériaux polymères pour la réalisation d'une électronique dite flexible ou organique. Cette branche de l'électronique est relativement récente puisque les premiers polymères conducteurs ont été mis au point en 1977 et les premiers composants électroniques utilisant ces matériaux ont vu le jour au milieu des années 1980. Aujourd'hui l'électronique organique permet de réaliser de nombreux composants électroniques comme les transistors à effet de champ (OFET), les cellules photovoltaïques (OPV), les diodes électroluminescentes organiques (OLED), des biocapteurs électrochimiques voire des actionneurs à base de polymères électroactifs (EAPS). Pour réaliser cette électronique de nouveaux procédés ont été développés, et certains sont maintenant utilisés à l'échelle industrielle comme l'impression en bande continue ou rotative (flexographie, héliogravure, ...). L'impression jet d'encre (IJP) et par jet d'aérosol (AJP), qui font partie des procédés d'impression 3D, permettent de réaliser certains composants électroniques organiques, notamment des capteurs [Muth, 2014 ; Sitthi-Amorn, 2015] et font actuellement l'objet de recherches intensives à ce sujet.

Ces procédés ne produisent toutefois que des composants sur des substrats planaires [Rossiter, 2009] ou qui nécessitent des opérations supplémentaires d'assemblage, ne permettant donc pas la conception de structures 3D mécatroniques complètes. Récemment, il a été proposé d'utiliser des polymères conducteurs avec le procédé d'impression 3D par dépôt de filament fondu (FDM, de l'anglais « Fused Deposition Modeling ») pour imprimer des capteurs de pression sur des objets 3D [Leigh, 2012]. Il a également été proposé d'utiliser des thermoplastiques fonctionnels pour l'impression de composants élémentaires tels que des antennes [ O'Brien, 2015].

Le potentiel des composites à matrice polymère pour de nombreuses applications comme les capteurs et actionneurs a déjà été démontré : [Coiai, 2015], [Deng, 2014]. De plus la science des nanocomposites et des nanoparticules (nano-argiles cationiques, nano-argiles anionique, nanoparticules de métal noble, nanotubes de carbone, etc.) a permis une meilleure compréhension et un meilleur contrôle des procédés de synthèse de ces matériaux. En particulier les thermoplastiques incorporant des charges carbonées sont prometteurs pour la fabrication de capteurs, par exemple de déformation, de force, de température, électrochimiques (détection liquide ou gaz), etc. Des composites avec un cœur métallique (par exemple en cuivre) et une matrice thermoplastique, développés et intégrés sur une imprimante FDM, permettent de réaliser des jauges de contraintes, sont également connus (voir US 2014/328964).

A l'heure actuelle, cependant, il n'est pas possible de fabriquer par impression 3D des systèmes mécatroniques complets. Des procédés hybrides permettent aujourd'hui cela, mais avec des potentialités limitées. La plus aboutie d'entre elles est la plateforme de Voxel8 (www.voxel8.co), spin-off de l'Université d'Harvard, qui combine la FDM pour la structure de l'objet, une encre métallique pour les pistes conductrices du circuit, et un système de positionnement de composants discrets.

Il est connu du document US 2015/173,203 un procédé de fabrication d'un système mécatronique comprenant un composant électrique. Néanmoins, ce composant électrique n'est pas un transducteur. Le document US 2015/173,203 divulgue également un appareil pour la mise en œuvre dudit procédé comprenant trois têtes d'impression solidaires.

Il est également connu du document WO 2014/209,994 un appareil pour la mise en œuvre d'un procédé avec dépôt de fil fondu comprenant plusieurs têtes d'impression pilotables indépendamment. De plus, le document US 2010/0021580 A1 divulgue un appareil de fabrication additive selon le préambule de la revendication 7.

L'invention vise à surmonter les inconvénients et limitations précités de l'art antérieur. Plus particulièrement, elle vise à permettre la fabrication, d'un seul tenant et par un même procédé d'impression 3D, du sous-système mécanique et d'au moins une partie du sous-système électrique d'un système mécatronique. Le terme « électrique » doit être interprété au sens large, incluant des fonctionnalités de type électronique et/ou électromagnétique, voire optoélectronique.

Conformément à l'invention, ce but est atteint en utilisant la technique d'impression tridimensionnelle par dépôt de fil fondu pour fabriquer à la fois une structure mécanique et au moins un composant électrique (piste conductrice, résistance, capteur...) solidaire de ladite structure, par exemple agencé à sa surface. Cela nécessite l'utilisation d'au moins deux matériaux distincts : un premier matériau, électriquement isolant, utilisé pour imprimer la structure, et au moins un deuxième matériau, conducteur ou résistif, utilisé pour imprimer le ou les composants électriques. On évite ainsi les inconvénients des techniques hybrides : surcoût dus aux étapes d'assemblages, fragilité mécanique, encombrement...

Un objet de l'invention est donc un procédé de fabrication d'un système mécatronique conformément à la revendication 1.

Encore un autre objet de l'invention est un appareil pour la mise en œuvre d'un procédé tel que mentionné ci-dessus, conformément à la revendication 7.

D'autres caractéristiques, détails et avantages de l'invention ressortiront à la lecture de la description faite en référence aux dessins annexés donnés à titre d'exemple et qui représentent, respectivement :

- la figure 1, un schéma fonctionnel d'un appareil selon un mode de réalisation de l'invention ;
- les figures 2A - 2C, une représentation schématique d'une étape de recuit local d'un procédé de fabrication selon l'invention ;
- la figure 3, une buse de pulvérisation d'un promoteur d'adhésion utilisée dans un procédé de fabrication selon un mode de réalisation de l'invention ;
- les figures 4A - 4E, différents motifs conducteurs réalisés par un procédé de fabrication selon un mode de réalisation de l'invention ;
- les figures 5A - 5C, des graphiques illustrant l'évolution de la résistance de différents motifs résistifs réalisés par un procédé de fabrication selon un mode de réalisation de l'invention en fonction de leurs paramètres géométriques ;
- les figures 6A et 6B, des éprouvettes de traction équipées de jauges de contrainte uniaxiales, réalisés par un procédé de fabrication selon un mode de réalisation de l'invention ;
- les figures 7A - 7C, des graphiques illustrant les résultats de mesures effectuées lors d'épreuves de traction d'éprouvettes du type illustré sur les figures 6A et 6B ;
- la figure 8, un capteur de flexion bidimensionnel réalisé par un procédé de fabrication selon un mode de réalisation de l'invention ;
- les figures 9A - 9E, la séquence de fabrication d'un capteur de force multi-axial réalisé par un procédé de fabrication selon un mode de réalisation de l'invention, et la figure 9F une vue latérale de ce capteur ;
- la figure 10, une vue en coupe d'un capteur acoustique réalisé par un procédé de fabrication selon un mode de réalisation de l'invention ;
- les figures 11A à 11H, des ordinogrammes illustrant un algorithme de génération d'un fichier d'impression pour une résistance électrique réalisée par un procédé de fabrication selon un mode de réalisation de l'invention ;
- les figures 12A - 12C, des illustrations de la notion de remplissage d'une surface ; et
- la figure 13, un ordinogramme illustrant un algorithme de génération d'un fichier d'impression pour d'une jauge de déformation piézorésistive réalisée par un procédé de fabrication selon un mode de réalisation de l'invention

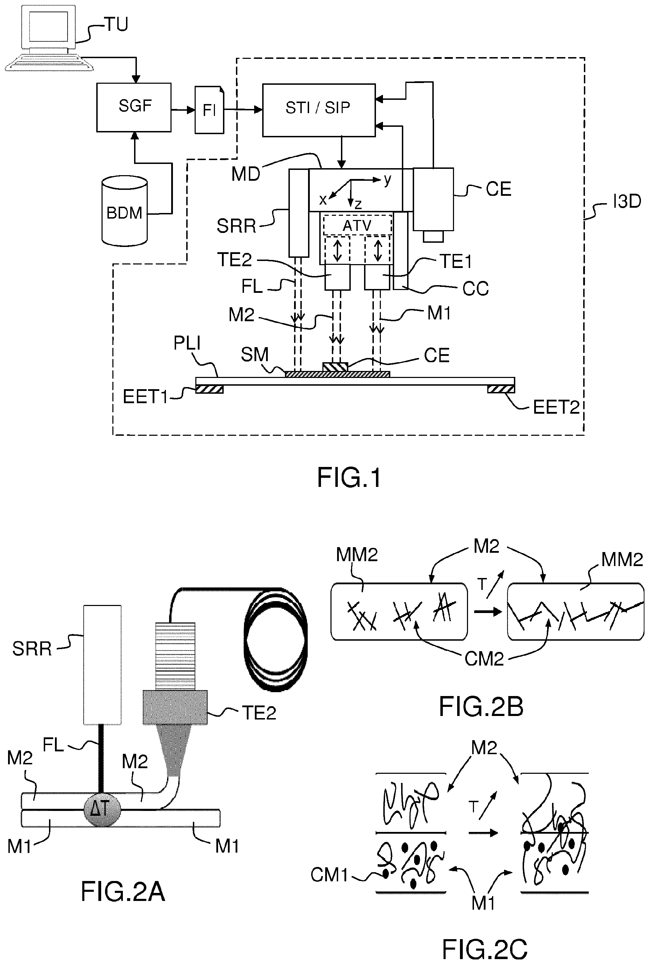

La figure 1 illustre, de manière schématique, un appareil pour la fabrication d'objets mécatroniques tridimensionnels conformément à un mode de réalisation de l'invention. Ces objets, fabriqués par dépôt de filament fondu et en particulier de thermoplastiques fonctionnels, comportent une structure mécanique, éventuellement articulée, et des composants électroniques tels que des composants passifs (résistance, condensateur, antenne, etc.), des capteurs et des actionneurs. L'appareil de la figure 1 permet d'imprimer des objets 3D complexes dotés de capacités d'interactions avec leur environnement ou l'utilisateur, avec un cycle de conception et de fabrication courts, des coûts réduits, une grande flexibilité dans la forme des objets et leur utilisation.

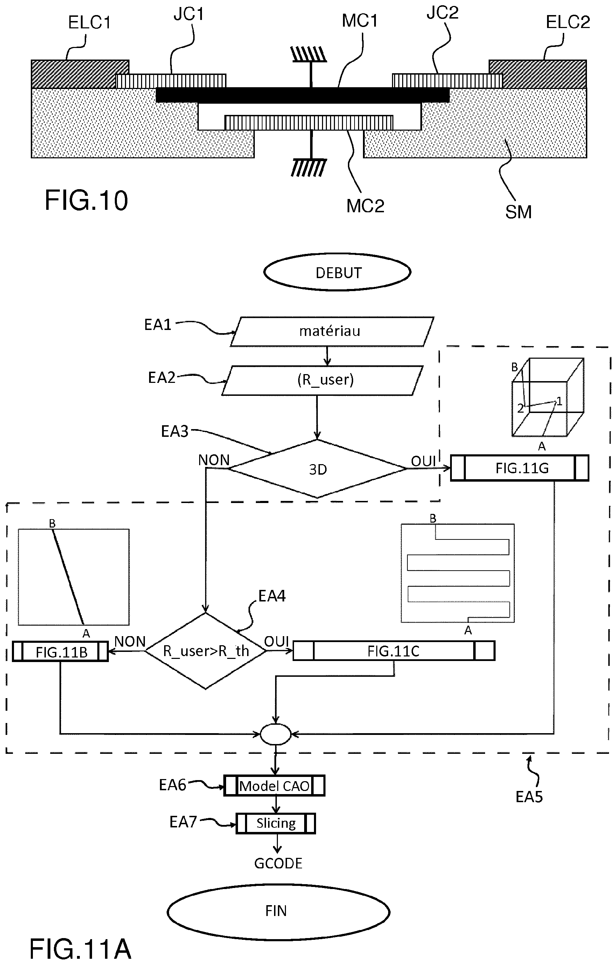

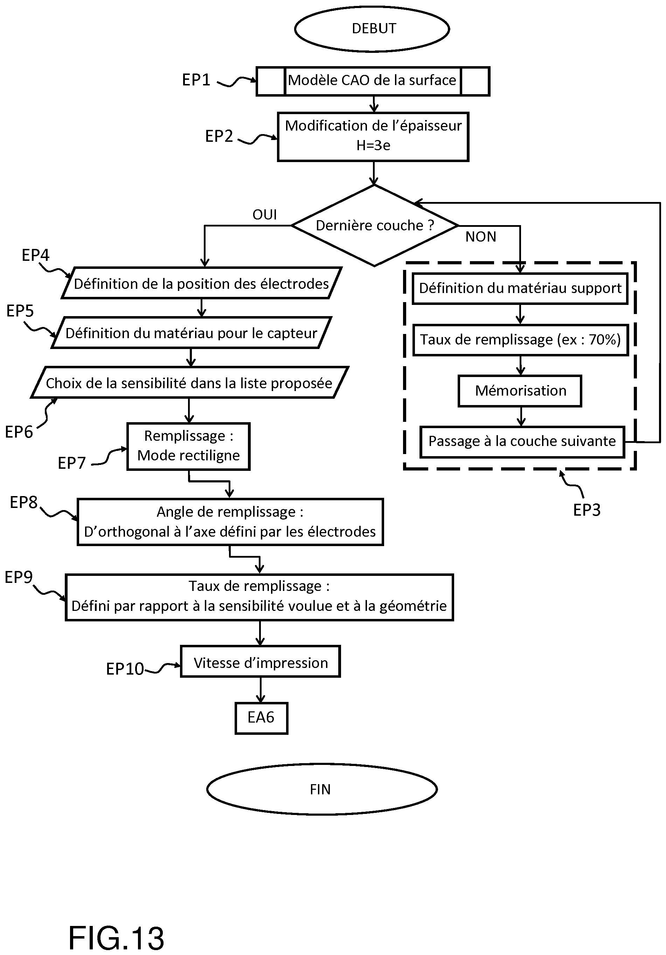

L'appareil comprend essentiellement une imprimante tridimensionnelle I3D, du type par dépôt de filament fondu - ou FDM - adaptée pour la mise en œuvre d'un procédé selon l'invention. Il peut également comprendre une interface de conception de composants électriques/électroniques imprimés. Cette interface peut comprendre une base de données BDM, stockés sur un support lisible par ordinateur tel qu'un disque dur, contenant une bibliothèque de composants électroniques et transducteurs réalisés par impression tridimensionnelle en utilisant des thermoplastiques fonctionnels, avec leurs modèles comportementaux. Elle peut également comprendre un système informatique SGF (typiquement un ordinateur) configuré pour recevoir en entrée, par l'intermédiaire d'un terminal utilisateur et éventuellement d'une interface graphique, les propriétés électriques et géométriques souhaitées d'un composant électrique et exploitant les modèles de la base de données pour générer un fichier d'impression FI contenant toutes les instructions qui permettent à l'imprimante I3D de fabriquer le dispositif électrique ainsi conçu. Les étapes aboutissant à la génération du fichier FI seront décrites dans la suite de ce document, en référence aux figures 11A - 11H et 13.

Comme représenté sur la figure 1, l'imprimante tridimensionnelle I3D comprend au moins deux têtes d'extrusion TE1, TE2 agencées côte à côte, portées par un même chariot d'impression CI, mobile selon trois directions orthogonales, x, y et z - la direction z correspondant à la direction d'extrusion des deux têtes d'extrusion - grâce à un mécanisme de déplacement MD, dont la structure n'est pas représentée en détail car elle est conventionnelle, piloté par un système informatique (ordinateur ou carte à microcontrôleur) SIP. L'utilisation de deux têtes d'extrusion distinctes facilite le dépôt d'au moins deux matériaux thermoplastiques différents : un matériau isolant M1 utilisé pour la fabrication de la structure mécanique SM du système mécatronique, et un matériau fonctionnel (conducteur ou résistif) M2 utilisé pour la fabrication d'au moins un composant électrique CE. La nature de ces matériaux sera discutée de manière détaillée plus loin. D'une manière générale, il s'agira le plus souvent de matériaux polymères thermoplastiques ou de composites présentant une matrice polymère thermoplastique. Au moins le matériau M2 contiendra généralement des charges influençant ses propriétés électriques, par exemple en le rendant conducteur.

Pour la réalisation de systèmes complexes, comprenant plus de deux matériaux, on pourra utiliser plus de deux têtes ; une même tête peut être utilisée pour déposer plusieurs matériaux différents, mais cela ralentit le procédé (il faut procéder à des changements de matériau d'alimentation de la buse) et introduit un risque de contamination.

Un mécanisme d'actionnement ATV permet d'ajuster la position verticale (en z) relative de chaque tête par rapport aux autres têtes. Cela permet en particulier de surélever les têtes inactives lors de la réalisation de structures complexes, où le risque de collision entre les têtes d'extrusion et les éléments déjà imprimés devient important. Même dans le cas d'une impression couche par couche simple, des résidus présents sur les têtes inactives, se trouvent être déposés de façon involontaire et non contrôlée, ce qui peut altérer les propriétés esthétiques (couleur, texture, etc.) et surtout fonctionnelles de l'objet final. Par exemple, cela peut conduire à des courts-circuits entre des pistes conductrices.

D'une manière conventionnelle, chaque tête d'extrusion TE1, TE2 comprend une buse d'extrusion présentant des bords chauffants et une bobine amenant à cette buse un filament du matériau thermoplastique M1, M2 à déposer. Typiquement, chaque buse est montée sur un bloc de chauffe, qui transmet la chaleur aux bords d'extrusion par conduction thermique. L'extrémité du filament en contact avec les bords chauffants de la buse fond, et le matériau fondu est éjecté de la buse sous l'effet de la pression exercée par la partie non encore fondue du filament, qui agit comme un piston.

Le contrôle de la quantité de matière par l'imprimante, peut être réalisé par un simple contrôle du poids, connaissant la densité du filament, le poids de la bobine support (standard, mais peut être déduit de ses dimensions et de la densité du matériau constitutif) et le diamètre du filament. Le poids peut être mesuré par un simple capteur de pression, ou un capteur de force plus complexe, qui pourrait provenir lui-même de l'impression 3D.

Par souci de précision, la mesure en temps réel du poids par le capteur, peut être complétée par une approche plus classique qui consiste à utiliser un capteur de contact pour mesurer le nombre de rotations effectuées par la bobine. A chaque tour un compteur s'incrémente de 1. La longueur consommée pour un tour complet est égale au périmètre de la bobine ; en multipliant cette longueur par la section du filament et par sa densité, on obtient la quantité de matière déposée.

La fiabilité de l'impression des structures multi-matériaux et fonctionnelles dépend notamment de la précision du positionnement des différentes têtes d'extrusion. La fiabilité repose tout d'abord sur une procédure d'étalonnage automatisé pour l'espacement entre les têtes d'extrusion et le plateau d'impression PLI (selon la direction z), et pour la position des têtes dans le plan (x,y) du plateau.

L'étalonnage de l'espacement entre les têtes d'extrusion et le plateau en hauteur (z), et de la planéité du plateau, se fait généralement grâce à un capteur de fin de course et un réglage des coins du plateau. Mais lorsqu'on utilise des plateaux de grande surface (par exemple de l'ordre de 20 cm x 20 cm ou plus), il devient difficile d'assurer sa planéité et donc l'utilisation d'un capteur de fin de course n'est pas satisfaisante. C'est pourquoi un appareil selon l'invention comprend un capteur capacitif CC solidaire du chariot d'impression. L'utilisation du capteur capacitif permet d'étalonner le plateau en plusieurs points sans le toucher et éviter les imprécisions mécaniques inhérentes aux capteurs mécaniques de fin de course couramment utilisés sur les servomoteurs. Le capteur capacitif agit comme un interrupteur sans contact. A la différence d'un capteur inductif, il détecte des matériaux non ferreux comme le verre, le bois, la peau, etc. Ce capteur va en fait tout simplement remplacer le contact de fin de course en étant installé directement sur le chariot d'impression.

L'étalonnage de la position des têtes d'extrusion dans le plan xy du plateau est important afin de bien aligner les parties de structure fabriquées avec les différentes têtes.

Pour une première couche (réalisant, par exemple, une surface de la structure mécanique), un étalonnage initial est réalisé grâce au capteur capacitif CC avec électrode de masse intégrée, et d'électrodes métalliques de masse (références EET1, EET2 sur la figure 1) placées dans les coins du plateau. En effet, à distance constante entre le capteur

et le plateau, la capacité mesurée sera plus grande avec une pièce métallique entre les deux électrodes du capteur plutôt qu'avec le revêtement ou matériau isolant du plateau.

**[0027]** Pour les couches suivantes, en particulier quand plusieurs têtes d'impression, sont utilisées, et donc plusieurs matériaux thermoplastiques sont imprimés, l'alignement avec la couche précédente et avec la partie imprimée avec un autre matériau doit être vérifié à l'aide d'un asservissement visuel mettant en œuvre une caméra CE reliée à un système de traitement d'images STI (qui, dans le mode de réalisation de la figure 1, coïncide avec le système informatique de pilotage SIP). L'asservissement visuel est réalisé de la manière suivante :

- une image de la surface d'impression, sur laquelle a été déposée au moins une couche de matière, est acquise par la caméra CE ; éventuellement, plusieurs images peuvent être acquises et moyennées pour améliorer l'écart signal à bruit ;
- un point de référence est choisi sur l'image, de manière automatique ou manuelle (intervention d'un utilisateur) ;
- la position de ce point de référence sur l'image prise par la caméra est comparée à sa position sur le modèle de la dernière couche déposée, déjà en mémoire dans l'imprimante ;
- la position du chariot d'impression suivant les axes x et y est calculée, et stockée en mémoire ;
- l'impression de la couche supérieure prend en compte ces décalages éventuels.

**[0028]** De préférence, comme dans le cas de la figure 1, la caméra d'étalonnage CE est solidaire du chariot, avec une position relative par rapport aux têtes d'extrusion qui est connue. En variante, la caméra peut être fixe et utiliser un repère visuel fixé au chariot d'impression pour déterminer la position relative de ce dernier par rapport au point de référence sur l'image.

**[0029]** Un procédé selon l'invention met nécessairement en œuvre au moins deux matériaux différents, déposés en couches superposées. Or, l'adhésion entre des couches hétérogènes n'est pas toujours satisfaisante. Pour cette raison, selon l'invention un recuit local in situ est effectué en même temps que, ou après, le dépôt d'une couche. Le rôle de ce recuit local est de fournir l'énergie thermique pour renforcer l'adhésion entre deux matériaux constitutifs de l'objet ; accessoirement il peut permettre également d'améliorer les propriétés intrinsèques des matériaux thermoplastiques fonctionnels utilisés.

**[0030]** La technologie actuelle de FDM repose sur la simple extrusion de couches de polymères adjacentes ou les unes au dessus des autres, et utilise la chaleur latente d'extrusion, avec l'aide ou non d'un plateau chauffant, pour fondre et souder les couches contiguës. Ce procédé induit une soudure incomplète ou non uniforme des couches, et en conséquence réduit les propriétés mécaniques en raison d'une délamination entre les couches en particulier dans le cas d'une charge appliquée perpendiculairement à la surface de la couche ou de la direction de dépôt du filament. Ceci est d'autant plus vrai pour les interfaces entre deux matériaux différents, où le mouillage entre les deux matériaux peut être partiel. Lors du dépôt du filament d'un deuxième sur une couche d'un premier matériau, le filament du deuxième matériau est à l'état fondu et le mouillage de la surface de la couche du premier matériau dépend de paramètres physico-chimiques des deux matériaux, tels que les tensions superficielles des deux espèces, la rugosité de surface du premier matériau et de la viscosité du deuxième matériau. Lors de la fabrication puis du refroidissement de la pièce, la délamination des couches peut alors avoir lieu du fait des surfaces de contact réduites, des forces d'adhésion qui sont trop faibles, et des différences entre les coefficients de dilatation thermique des deux matériaux.

**[0031]** Le recuit réalisé lors de la mise en œuvre de l'invention repose sur la chauffe locale des matériaux déposés par le biais de nano-charges (CM1, CM2 sur les figures 2B et 2C), incorporées dans les matrices des matériaux (MM1, MM2 sur ces mêmes figures) et capables d'absorber un faisceau électromagnétique irradiant d'une ou plusieurs longueurs d'onde données. Dans le mode de réalisation de la figure 1, une source de rayonnement électromagnétique SRR, par exemple un laser infrarouge, est fixée au chariot d'impression ; la référence FL désigne le faisceau électromagnétique généré par la source (ici un faisceau laser, mais il pourrait aussi s'agir d'un autre type de rayonnement, par exemple des microondes, voir par exemple WO2015130401, ou des radiofréquences).

**[0032]** Le recuit peut être effectué pendant l'impression de la couche concernée, selon différentes configurations :

- passage du faisceau derrière la tête d'extrusion active et une action sur la dernière couche déposée (configuration illustrée sur la figure 2A ; où la référence $\Delta T$ représente symboliquement un échauffement localisé) ;
- passage du faisceau de façon indépendante (tête d'extrusion inactive), avec une action sur : la ou les dernières couches déposées dans le cas d'un matériau homogène ; la ou les dernières couches du premier matériau, situé en-dessous du deuxième, par transmission à travers ce dernier, qui est transparent à la longueur d'onde utilisée.

**[0033]** Le système de recuit a été représenté de manière très schématique sur les figures 1 et 2A ; en pratique il comprendra une source émettrice de radiations, un système de focalisation (éventuellement intégré à la source) et un système de guidage du faisceau jusqu'au point d'impact, typiquement une fibre optique. Dans le mode de réalisation de la figure 2A, la source de rayonnement de recuit SRR est solidaire du chariot d'impression, mais dans d'autres modes

de réalisation elle peut être indépendante.

Les nano-charges absorbant les radiations peuvent être sélectionnées dans le groupe composé des nanotubes de carbone, noir de carbone, buckyballs, graphène, nanoparticles supermagnétiques, nanoparticules magnétiques, nanofils métalliques, nanofils semiconducteurs, quantum dots, polyaniline (PANI), poly3,4-ethylenedioxythiophene polystyrenesulfonate, et leurs combinaisons. Leur choix s'effectuera non seulement sur la base de leur fonctionnalité ainsi transférée au composite (par exemple une conductivité électrique) mais également sur la base de la longueur d'onde de la radiation correspondant à l'absorbance optique maximale de la charge et donc une chauffe optimale pour une puissance minimale. Par exemple, de nombreuses charges possèdent une absorbance élevée aux microondes, par exemple les métaux, les oxydes, le carbone (notamment les nanotubes de carbone « CNT ») et les polymères conducteurs (par exemple le polypyrrole). L'utilisation de radiations à radiofréquences (de l'ordre de la dizaine de MHz) s'avère quant à elle adaptée pour les charges céramiques, telles que SiC, ZnO ou $TiO_2$. L'utilisation d'un laser infrarouge est particulièrement efficace pour les matrices non chargées ou chargées en fibres (par exemple des fibres de carbones). Les charges absorbant les radiations peuvent déjà être présentes dans le filament fondu, ou être déposées par pulvérisation d'une suspension.

Le recuit permet l'interdiffusion des chaines polymères des matrices entre les couches adjacentes (figure 2C), tout en limitant la chauffe du reste de la pièce et ainsi réduisant significativement l'altération de ses dimensions, notamment par fluage et cyclage thermique.

La distribution et la répartition des charges de fonctionnalisation CM2 dans les filaments déposés peuvent être modifiées lors du processus d'extrusion, ou n'être pas optimales initialement. Le recuit local in situ permet aussi d'homogénéiser la répartition des charges dans le volume de la matrice, de reformer un maximum de réseaux de percolation (conducteur, semi-conducteur ou diélectrique en fonction de la nature des charges), et donc d'améliorer les propriétés fonctionnelles du composite dans la structure finale. Cela est illustré schématiquement sur la figure 2B.

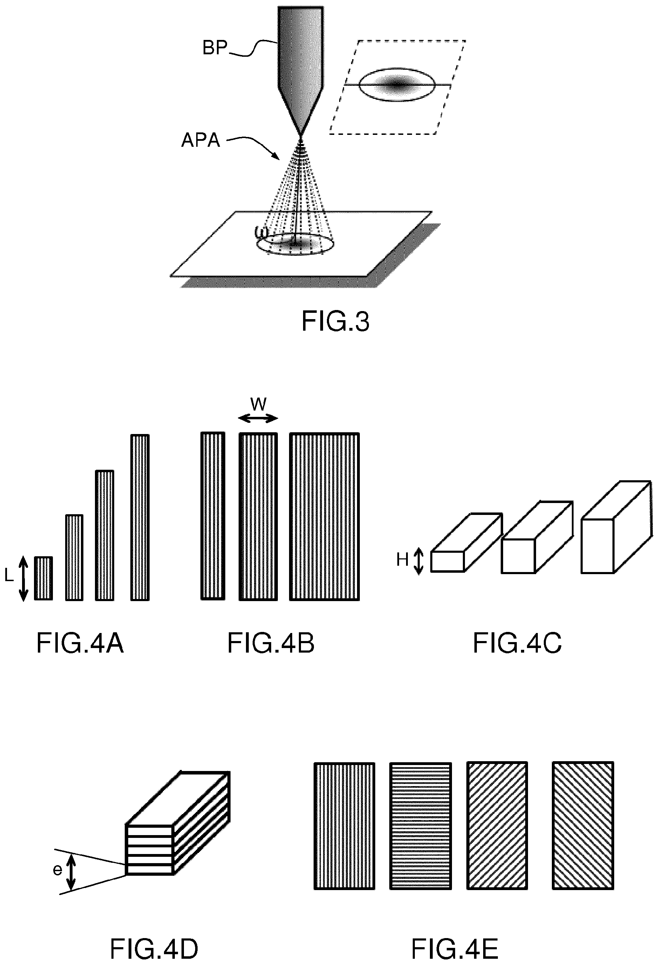

Le dépôt d'un promoteur d'adhésion à l'interface entre deux parties constituées de thermoplastiques différents, et notamment avec des matrices différentes dans le cas des composites, peut être utilisé en remplacement ou complément du recuit par faisceau irradiant et d'améliorer l'adhésion entre ceux deux parties. Ce dépôt est réalisé grâce à une buse de pulvérisation en gouttelettes, par exemple une valve avec arrivées d'air d'atomisation, d'air pour la commande et de promoteur d'adhésion liquide. Un tel dispositif est représenté très schématiquement sur la figure 3, où il est identifié par la référence BP ; la référence APA désigne le jet d'agent promoteur d'adhésion.

Il est connu que le profil de dépôt par pulvérisation du promoteur d'adhésion sur la surface est gaussien et centré sur le point en face du pulvérisateur. Afin d'obtenir un profil de concentration le plus uniforme possible il convient donc de programmer des chemins de passage pour la buse pulvérisation. Le promoteur d'adhésion peut être un liquide homogène ou une suspension de particules nano ou micrométriques. Dans ce dernier cas, il faudra bien s'assurer d'avoir une suspension homogène au préalable lors de sa préparation, notamment grâce à des étapes de sonication puis de centrifugation. Dans tous les cas, la réaction du promoteur d'adhésion avec les interfaces et/ou la vaporisation du solvant doivent permettent de laisser in fine une couche d'adhésion solide. De surcroît, il est prévu que le dispositif de pulvérisation puisse permettre de déposer des particules absorbantes, qui une fois prises en sandwich entre deux couches, d'un même thermoplastique ou de deux thermoplastiques différents pourront être irradiées avec le faisceau décrit précédemment et permettre d'améliorer l'adhésion de cette façon.

Comme cela a été mentionné plus haut, le matériau de structure M1 d'un objet mécatronique selon l'invention est un matériau isolant électrique. Le matériau de structure pourra être un polymère, tel qu'un thermoplastique, un élastomère thermoplastique, une céramique, ou un composite à matrice thermoplastique ou céramique. La matrice thermoplastique pourra faire partie du groupe, mais pas seulement, incluant l'acrylonitrile butadiène styrène (ABS), acide polylactique (PLA), polyamide (Nylon), polyimide (PI), polyéthylène (PE), polypropylène (PP), polystyrène (PS), polytétrafluoréthylène (PTFE), polyvinylchlorure (PVC), polyuréthane (PU), polycarbonate (PC), polyphénylsylfone (PPSU), polyéther éther cétone (PEEK) et leurs mélanges. La céramique pourra être sélectionnée parmi le groupe composé des oxydes, carbures, borures, nitrures et siliciures. Par exemple, les céramiques compatibles incluent le nitrure de silicium, le PZT, l'oxyde d'aluminium ou encore l'hydroxypatite. Les composites utilisés peuvent incorporer tout type de charges, qui permettent de modifier et d'ajuster ses propriétés mécaniques et thermiques, telles que des charges céramiques ou métalliques, des fibres de verre ou de carbone, ou des particules carbonées.

Le ou les composants électriques sont réalisés en au moins un matériau M2 thermoplastique fonctionnel, qui est généralement un composite ayant des propriétés telles qu'une bonne conductivité électrique et/ou une piézorésitivité ou piézoélectricité et/ou une bonne conductivité thermique et/ou un coefficient diélectrique élevé, etc. Par exemple, pour un thermoplastique électriquement conducteur, les charges peuvent faire partie du groupe des particules carbonées incluant le noir de carbone, le graphène, les nanotubes de carbones. Pour obtenir une bonne conductivité thermique, des charges ou nanotubes métalliques peuvent être incorporés. Ce matériau devra avoir les propriétés adéquates pour une mise en forme via FDM, à savoir une température de fusion proche de celle du ou des matériaux de structure et inférieure à 300°C, et une viscosité suffisamment faible dans la zone de fusion. Pour cela, une solution est, dans la mesure du possible, d'utiliser une matrice polymère identique ou similaire à celle du matériau de structure M1. Utilisé seul ou associé avec un autre thermoplastique, fonctionnel ou non, le thermoplastique fonctionnel M2 entre dans la fabrication d'un composant électrique ou électronique tel qu'un composant passif (résistance, condensateur, antenne, etc.), un capteur ou un actionneur.

Pour tirer pleinement profit des caractéristiques avantageuses d'un appareil et d'un procédé selon l'invention, il est possible de développer et d'intégrer des nouveaux matériaux thermoplastiques ayant des propriétés fonctionnelles permettant de réaliser des composants électroniques, capteurs et actionneurs.

L'intégration de ces matériaux demande des caractérisations électriques et mécaniques exhaustives, afin d'identifier les paramètres à ajuster pour garantir une fonctionnalité optimale dans l'objet 3D mécatronique. Pour cela, les inventeurs se sont notamment intéressés aux thermoplastiques composites suivants :

- matériau 1 : matrice ABS/ charges CB (noir de carbone)
- matériau 2 : matrice PLA / charges CB
- matériau 3 : matrice PI-ETPU (polyimide / engineering thermolastic polyurethane)/ charges CB
- matériau 4 : matrice PLA / charges CNT (nanotubes de carbone)
- matériau 5 : matrice PLA / charges graphène

Les matériaux ayant fait l'objet de ces études de caractérisation sont des thermoplastiques chargés avec des particules carbonées ayant une conductivité électrique intrinsèque élevée. Ces composites ont une conductivité électrique qui dépend non seulement de la nature des charges, mais également de leur concentration et distribution dans la matrice thermoplastique. La concentration des charges doit être suffisante pour permettre la formation de chemin de conduction ou percolation, mais suffisamment basse pour que la viscosité du filament permette l'extrusion continue du filament fondu dans une gamme de température inférieure à 300°C. La distribution des charges dans le filament composite dépend du procédé de mise en forme du filament composite (extrusion mono ou bi-vis), du contrôle des paramètres procédés et de la préparation des particules avec une potentielle fonctionnalisation de surface. Une distribution et répartition homogène des charges permet un plus grand nombre de chemins de percolation et donc une meilleure conductivité électrique du composite. Mais in fine les propriétés électriques du composite sont aussi modulées aussi par les paramètres procédés et géométriques utilisés lors de l'impression de l'objet 3D par FDM.

Comme indiqué plus haut la viscosité, flexibilité et dureté des cinq composites étudiés n'est pas la même du fait de leurs matrices, leurs charges, et leur mise en forme qui diffèrent. Pour cela les paramètres procédés doivent être adaptés afin de permettre une extrusion continue du filament. Pour les matériaux étudiés, la température d'extrusion dépend principalement de la matrice thermoplastique utilisée : 210-220°C pour le PLA chargé, 230°C pour l'ABS chargé et 220°C pour le PI-ETPU chargé. Il est clair cependant que ces valeurs ont été optimisées par les fabricants, et notamment en adoptant la concentration de charges adéquate.

La vitesse de déplacement des buses pendant l'impression, ou vitesse d'impression, est régie par d'autres paramètres que la viscosité cependant.

L'extrusion du filament est permise grâce à l'engrènement du filament, pincé entre une roue fixe et une roue mobile, et la partie supérieure du filament, solide, fait piston sur la partie inférieure, liquide. Les filaments flexibles ont une tendance au flambage sous l'effet de la contrainte en compression, et ceci en dépit d'une conception de la tête d'extrusion permettant de limiter les mouvements latéraux du filament. L'abaissement de la vitesse, typiquement 20mm/s, permet de laisser le temps au filament fondu d'être extrudé, et de rester en dessous de la contrainte limite de fluage pour les filaments flexibles.

Les nanoparticules carbonées, par exemple les CNT et le graphène, sont non seulement de bons conducteurs électriques, mais également de bons conducteurs thermiques. Une vitesse d'impression trop basse risque de laisser le cœur du filament fondu se refroidir par conduction thermique interne, malgré le contact sur les bords avec les buses chaudes. Ce phénomène nécessite de limiter le temps de transit du filament dans la buse, de sorte qu'il soit suffisamment long pour permettre la liquéfaction du filament, et suffisamment court pour empêcher la resolidification du cœur. Dans ce cas, une vitesse d'impression élevée, typiquement 80mm/s, permet d'avoir une extrusion continue et d'éviter le bouchage (clogging, en anglais) de la buse.

Un dernier paramètre est à prendre en compte en fonction de la nature de la matrice thermoplastique, et de son comportement à l'état fondu, est la distance entre la buse et le plateau pour la première couche. En effet, une viscosité et une élasticité élevées nécessitent un espacement plus important, comme pour l'ABS par rapport au PLA dans le premier cas, et pour le PI-ETPU par rapport au PLA dans le second cas.

Pour réaliser des modèles mathématiques des composants électriques pouvant être fabriqués conformément à l'invention, des motifs en forme de barreau rectangulaire ont été réalisés à partir des cinq matériaux ci-dessus, et caractérisés. Ces motifs diffèrent par leur longueur L (fig. 4A), largeur W (fig. 4B), épaisseur globale H (fig. 4C), épaisseur e de chaque couche élémentaire, ou « strate » (fig. 4D) et direction d'impression (fig. 4E). Une caractérisation électrique exhaustive a permis de classer les matériaux en fonction de leur conductivité et d'établir des lois reliant la résistance des motifs aux paramètres géométriques cités ci-dessus.

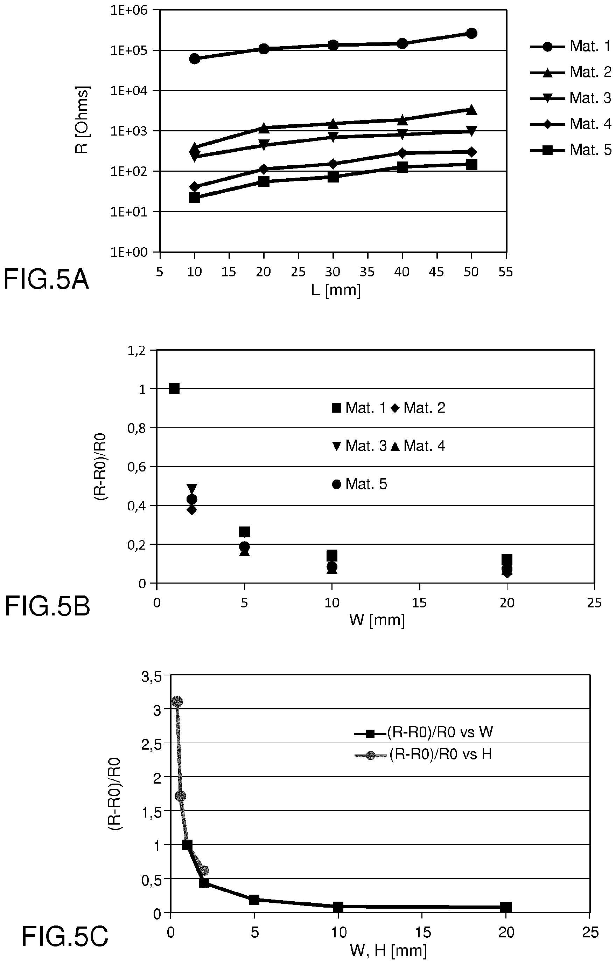

La figure 5A montre l'évolution de la résistance d'un barreau rectangulaire (W=20mm, H=400$\mu$m, direction d'impression par rapport à la longueur du barreau=0°, T=200$\mu$m) en fonction de sa longueur L pour les 5 matériaux étudiés. Les matériaux les plus conducteurs sont facilement identifiables : la conductivité décroit lorsque l'indice du matériau augmente de 1 à 5. La figure 5B montre l'évolution de la résistance relative moyenne des barreaux (L=50mm, H=0,4mm, direction d'impression par rapport à la longueur du barreau=0°, T=200$\mu$m) en fonction de sa largeur pour les 5 matériaux étudiés. La résistance relative moyenne est donnée par (R-R0)/R0, où R est la résistance du barreau considéré et R0 celle d'un barreau de référence présentant une longueur égale à 10 mm. L'évolution en loi inverse est valable pour tous, démontrant leur comportement ohmique. La figure 5C montre l'évolution de la résistance relative moyenne des barreaux en fonction de leur largeur (L=50mm, H=0,4mm, direction d'impression par rapport à la longueur du barreau=0°, T=200$\mu$m) et de leur hauteur (L=50mm, W=20mm, direction d'impression par rapport à la longueur du barreau=0°, T=200$\mu$m) pour le Matériau 4. La résistance est inversement proportionnelle à la largeur et à la hauteur du barreau, avec la puissance unité.

La variation relative de résistance R des motifs en fonction de la longueur L, de la largeur W et de la hauteur H, est quasiment identique pour les cinq composites. Qualitativement, sur les Figures 5A - C, on remarque également que les thermoplastiques chargés une fois imprimés se comportent comme des conducteurs ohmiques, et que la résistance obéit à l'expression générale :

$$R = \frac{\rho.W.H}{L},$$

ou p est la résistivité du barreau mesurée dans sa longueur. Ce comportement ohmique est par ailleurs supporté par de nombreuses caractéristiques courant-tension réalisé sur les différents échantillons fabriqués.

La résistance varie également en fonction de la direction d'impression, et d'après la loi ci-dessus, il est possible relier de façon empirique cette variation à la résistivité intrinsèque du motif imprimé, c'est-à-dire à la microstructure de celui-ci. Les résultats obtenus sont reproduits dans le tableau 1 ci-dessous. La résistivité du barreau augmente lorsque la direction d'impression passe de 0° à 45° puis 90°. Cet angle est évalué par rapport à la longueur du barreau.

| Matériau | Résistivité volumique du filament | Résistivité du motif imprimé |
|---|---|---|
| 1. ABS/CB | 10 000 Ohm.cm | 4 300 Ohm.cm +/- 1800 Ohm.cm à 0° 7 000 Ohm.cm à 45° 10 000 Ohm.cm +/- 1200 Ohm.cm à 90° |
| 2. PLA/CB | 15-115 Ohm.cm | 15 Ohm.cm +/- 5 Ohm/cm à 0° 30 Ohm.cm à 45° 40 Ohm.cm +/- 5 Ohm/cm à 90° |
| 3. PI-ETPU/CB | 100 Ohm.cm | 60 Ohm.cm +/- 30 Ohm.cm à 0° 140 Ohm.cm à 45° 350 Ohm.cm +/- 50 Ohm.cm à 90° |
| 4. PLA/CNT | 0.75 Ohm.cm | 2,3 Ohm.cm +/- 1,2 Ohm.cm à 0° 4,6 Ohm.cm +/- 1 Ohm.cm à 90° |
| 5. PLA/graphène | 1 Ohm.cm | 1,7 Ohm.cm +/- 0.5 Ohm.cm à 0° |

Tableau 1 - Résistivité des thermoplastiques conducteurs et directions d'impression.

L'influence de l'épaisseur « e » des strates imprimées sur la résistance est en revanche négligeable pour la plupart des matériaux, sauf pour le Matériau 3. La diminution de la résistance d'un facteur 2,5 lorsque e varie entre 100 et 300$\mu$m pour le Matériau 3 pourrait s'expliquer par une continuité verticale entre les couches (moins d'interfaces couche-couche homogènes) qui potentiellement permet un plus grand nombre de chemins de percolations. Dans ce cas, l'utilisation d'un recuit local, comme décrit dans la présente invention, permettrait de former de nouveaux chemins de percolation aux interfaces inter-couches et améliorerait significativement la conductivité électrique du motif imprimé.

Afin d'en caractériser la piézorésistivité, les matériaux 1 à 5 ont été utilisés pour fabriquer des éprouvettes de traction uni-axiale en haltère, imprimées par FDM.

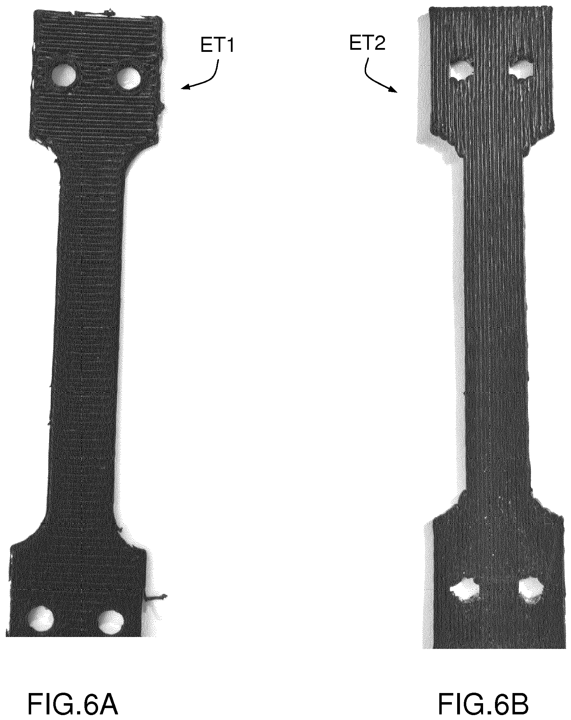

Ces éprouvettes ont été conçues en exploitant la différence de résistivité en fonction de la direction d'impression, et avec des dimensions conformes à la norme ASTM D638, c'est-à-dire pour la partie utile : L=50mm, W=10mm, H 300$\mu$m. Pour chaque matériau, des exemplaires ont été imprimés entièrement à des directions d'impression, mesurées par rapport à la longueur de l'éprouvette, de 0°, 45° ou 90°. Des exemples ET1 (0°), ET2 (90°) des éprouvettes fabriquées sont illustrés sur les figures 6A et 6B.

La traction a été exercée par le biais de poids suspendus verticalement au bas de l'échantillon, tandis le haut de l'échantillon était fixé via un mors au bâti. Les masses suspendues étaient de 100 g, 200 g, 500 g et 1 kg. En supposant que les éprouvettes n'ont pas de défaut, la contrainte se concentrait dans la partie utile, et la contrainte appliquée variait entre 3 et 33 MPa.

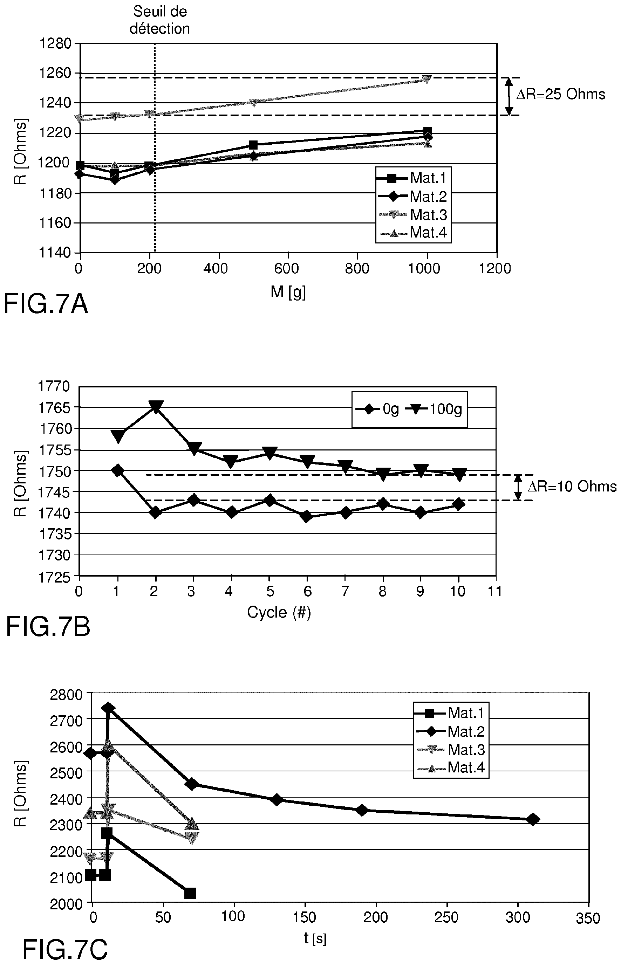

Les résultats des essais sont illustrés sur les figures 7A - 7C.

La figure 7A illustre l'évolution de la résistance électrique R des éprouvettes de traction en Matériau 2 en fonction de la masse M du poids suspendu verticalement. Le taux de remplissage est de 100%, l'éprouvette est donc massive.

La figure 7B illustre l'évolution de la résistance électrique des éprouvettes de traction, sous chargement nul ou de 100g, au cours d'un cyclage mécanique en chargement/déchargement. Les éprouvettes considérées ici ont un taux de remplissage de 80%, ce qui signifie qu'il existe un espacement entre les filaments, ou stries, qui forment le corps de l'éprouvette, dont environ 20% est constitué d'espaces vides.

La figure 7B illustre l'évolution dans le temps t de la résistance électrique des éprouvettes de traction suite au retrait d'un chargement de 100g. Suite à une augmentation brutale, la résistance diminue progressivement vers la valeur de repos.

Parmi les matériaux étudiés, le Matériau 3 a démontré un comportement piézorésistif avec effet de seuil, lorsque l'éprouvette est imprimée à 90°, comme reporté sur la Figure 7A. Le seuil à partir duquel la variation de résistance apparaît peut être abaissé en diminuant le taux de remplissage lors de l'impression par FDM, c'est-à-dire en modulant la qualité du contact entre les stries. Si le taux de remplissage est élevé, il y aura chevauchement entre les stries adjacentes. Plus ce taux diminue, l'épaisseur de l'extrudat étant constant, plus la partie ou il y a chevauchement diminue, et l'interface entre les stries adjacentes voit apparaître des trous ou porosités, où l'air est piégé. Le taux de porosité est donc un paramètre important permettant de contrôler la résistance et le seuil de piézorésistivité du motif imprimé. Après un cycle de déverminage (rupture des chemins faibles qui se produit lors des premières utilisations, conduisant à des variations rapides des propriétés électriques suivies par une phase de stabilisation), on remarque que la variation de résistance apparaît dès 100g de chargement pour un barreau avec un taux de remplissage de 80%, avec une bonne répétabilité et une endurance d'au moins 10 cycles (cf. Figure 7B).

Le même comportement piézorésistif est observé pour les éprouvettes dont les stries sont imprimées à un angle d'impression de 90° par rapport à la longueur de l'éprouvette avec le Matériau 5. Cependant un phénomène de relaxation de la matrice élastomère suite au chargement ou déchargement est observé. Pour le déchargement, ce phénomène induit une augmentation brutale de la résistance puis une diminution logarithmique vers la valeur de repos (cf. Figure 7C). Cette réponse temporelle est ainsi un problème non négligeable dans la fiabilité de la mesure et son exploitation pour réaliser un capteur.

Les modèles comportementaux et lois établis pour la piézorésistivité du Matériau 2, et ceux établis pour la résistivité des thermoplastiques conducteurs permettent de réaliser des capteurs qui tirent partie de ces propriétés.

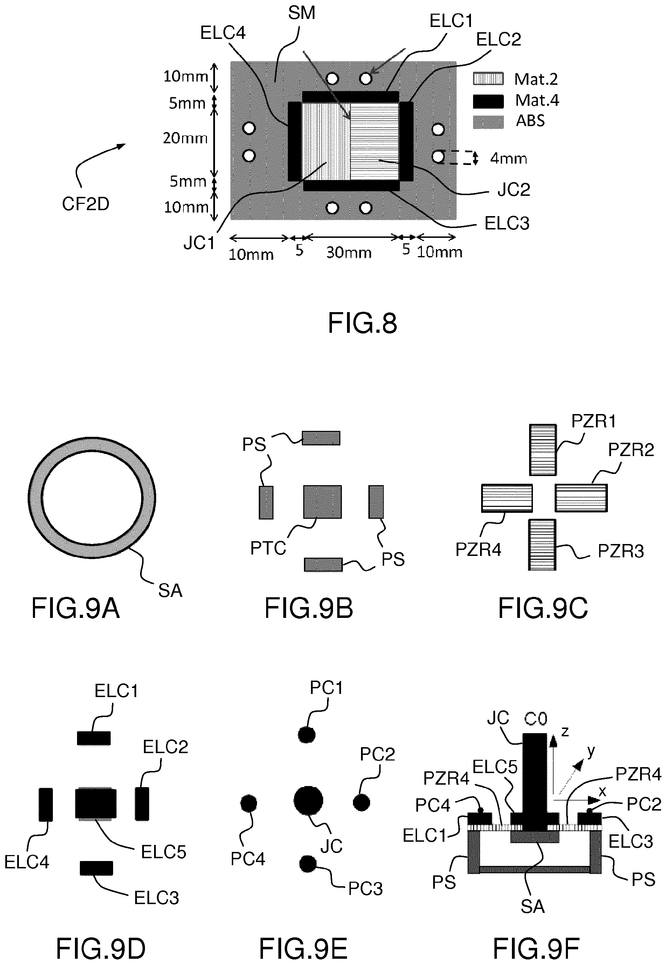

La figure 8 représente un capteur de flexion bidimensionnel CF2D fonctionnel, entièrement imprimé par FDM avec 3 matériaux thermoplastiques différents. Ce composant comprend en effet une structure SM en thermoplastique isolant (ABS), 4 électrodes de contact ELC1, ELC2, ELC3, ELC4 en thermoplastique conducteur (Matériau 4), et 2 parties centrales JC1, JC2 en thermoplastique chargé ayant un comportement piézorésistif (Matériau 2), imprimé selon des directions d'impression orthogonales, formant des jauges de contrainte, supportées par la structure mécanique SM et dont les axes de sensibilité (déterminés par la direction d'impression, et donc par l'alignement des filaments constitutifs) sons mutuellement perpendiculaires.

Afin d'éviter les temps morts nécessaires pour les changements de bobine, le capteur a été imprimé en utilisant trois têtes d'extrusion, une par matériau. Une fine couche de promoteur d'adhésion a été déposée aux interfaces hétérogènes.

Les parties centrales du capteur sont respectivement un rectangle JC1 de Matériau 2 imprimé à 0° et un rectangle JC2 de Matériau 2 imprimé à 90°, avec une épaisseur de $600\mu$m. D'après les résultats de caractérisation, seul le rectangle dont la direction d'impression est perpendiculaire à la direction de sollicitation en traction produit un changement de résistance électrique. L'autre bloc conserve la même résistance. La juxtaposition de ces deux blocs permet donc de mesurer une contrainte suivant l'axe x ou l'axe y, voire une contrainte bi-axiale en traction.

Lorsque le substrat en ABS subit une contrainte de flexion, sa face supérieure est sollicitée en traction. Cette sollicitation est transmise aux blocs de Matériau 2 par cisaillement à l'interface. Les résultats obtenus avec ce capteur, et démontrant sa fonctionnalité, sont présentés dans le tableau 2 ci-dessous :

Tableau 2.

| Déformation ($\varepsilon$) | Grande dimension (60mm) | Petite dimension (50mm) |
|---|---|---|
| $\varepsilon$=0 | 409$\Omega$ | 630 $\Omega$ |

(suite)

| Déformation (ε) | Grande dimension (60mm) | Petite dimension (50mm) |
|---|---|---|
| Couche supérieure en traction: ε>0 | 456Ω | 723Ω |
| Couche supérieure en compression: ε<0 | 370Ω | 273Ω |

La liberté de forme permise par le procédé et la disponibilité de thermoplastiques conducteurs et piézorésistifs, permet la réalisation de capteurs de force multidimensionnels. La figure 9F montre une vue latérale d'un tel capteur présentant la forme d'un mini-joystick pouvant transduire l'effort appliqué sur le connecteur central et ses composantes x et y. Ce capteur présente une structure mécanique isolante comprenant un substrat annulaire SA, des piliers-support PS et une plateforme centrale PTC en matériau isolant ; des éléments piézorésistifs PZR1 - PZR4 formant des ponts suspendus réalisés à l'aide d'un support imprimé en polymère sacrificiel, par exemple soluble ; des électrodes de contact EC1 - EC5, le joystick central JC et des piliers conducteurs PC1 - PC4 pour l'accroche de la connectique. Les figures 9A - 9F montrent ces différents éléments séparément.

La figure 10 illustre un capteur acoustique de type piézorésistif, également réalisé par un procédé d'impression selon l'invention. Il comprend une structure mécanique isolante SM, deux électrodes de contact ELC1, ELC2 en thermoplastique conducteur, deux membranes conductrices MC1, MC2, également en thermoplastique conducteur, formant les deux armatures d'un condensateur, et des jauges de contrainte JC1, JC2, reliées chacune à une électrode de contact respective et à la membrane conductrice MC1. Les jauges de contrainte permettent de mesurer les déformations de la membrane MC1 sous l'effet d'une onde acoustique.

Comme cela a été évoqué plus haut, une interface de conception est avantageusement prévue pour faciliter la conception des composants électriques imprimés. Cette interface est un système informatique (ordinateur, réseau d'ordinateur, carte à microprocesseur...) programmé pour recevoir en entrée des paramètres d'un composant électrique à fabriquer, tels que les propriétés électriques souhaitées, la position de ses points de prise de contact, son emplacement au sein ou à la surface d'une structure mécanique...et de fournir à sortie, grâce à l'application d'algorithmes appropriés, un fichier d'impression (typiquement au format GCode) qui permet le pilotage de l'imprimante tridimensionnelle.

Les organigrammes des figures 11A à 11H illustrent, à titre d'exemple non limitatif, les algorithmes permettant d'aboutir au fichier d'impression pour un composant électrique simple, à savoir une résistance déposée sur un substrat isolant. La figure 13 illustre, également à titre d'exemple non limitatif, un algorithme permettant d'aboutir au fichier d'impression pour une jauge de déformation axiale.

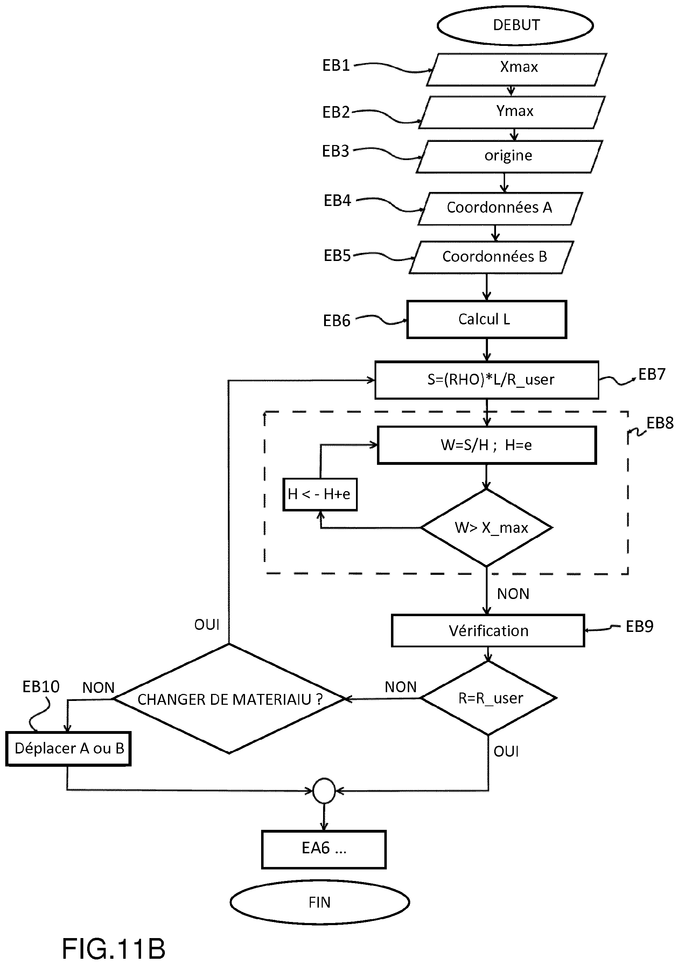

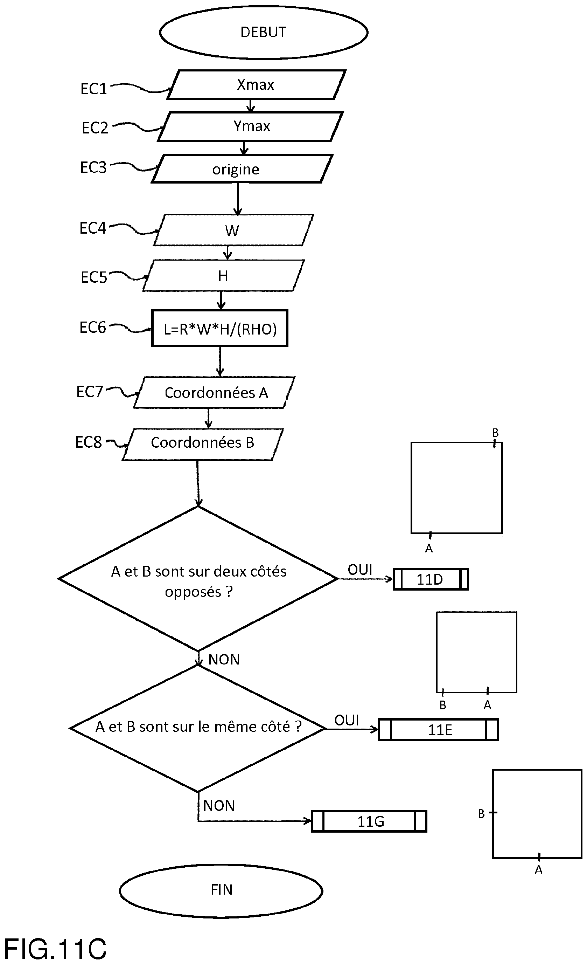

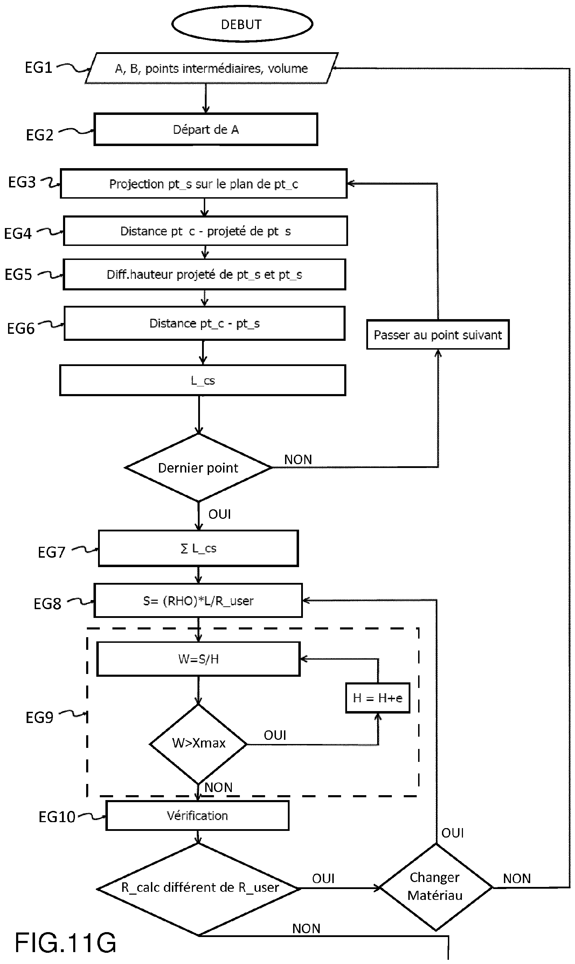

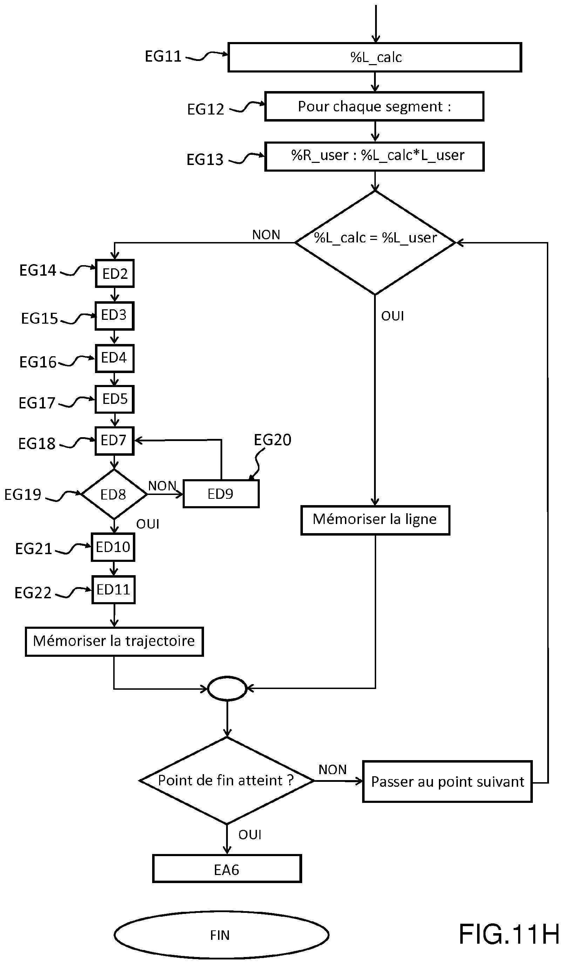

Une résistance fabriquée par impression tridimensionnelle peut être bidimensionnelle (c'est-à-dire planaire, déposée sur une surface) ou tridimensionnelle - passant donc par des points non coplanaires, qui peuvent être imposés. Dans le cas d'une résistance bidimensionnelle, on peut adopter une géométrie linaire - pour des faibles valeurs de résistance - ou en zigzag ou serpentin - pour des valeurs de résistance plus élevés. Ces trois différents cas nécessitent des algorithmes de conception différents. Ainsi, comme illustré dans la figure 11A, l'utilisateur d'une interface de conception selon l'invention définit d'abord le matériau thermoplastique à utiliser (étape EA1), dont les propriétés sont connues et stockées dans la base de données de modèles BDM, et la valeur de résistance R_user à atteindre (étape EA2), puis (EA3) il indique si la résistance est tridimensionnelle ou doit respecter des points de passage imposés. Dans l'affirmative, l'interface de conception appliquera un algorithme de conception de résistances tridimensionnelles, illustré sur les figures 11G et 11H. Autrement, le système déterminera de manière autonome (EA4), en fonction de la valeur R_user, s'il convient de réaliser une géométrie linéaire (par exemple si R_user est inférieure à un seuil prédéfini R_th), auquel cas il appliquera l'algorithme illustré sur la figure 11B, ou bien une géométrie en zigzag (par exemple si R_user est supérieure ou égale à R_th), auquel cas il appliquera l'algorithme illustré sur les figures 11C à 11F. Le choix entre une géométrie linéaire et en zigzag peut également prendre en compte d'autres paramètres, par exemple d'encombrement, ou être laissé à l'appréciation de l'utilisateur.

Quelle que soit la géométrie choisie, l'algorithme de conception appliqué définit le volume de la résistance à fabriquer (EA5). Ensuite (étape EA6) un modeleur CAO (conception assistée par ordinateur) génère un maillage triangulaire de ce volume sous forme de triangle, qui est typiquement enregistré sous la forme d'un fichier de stéréolithographie au format STL. On procède ensuite (étape EA7) au découpage en tranches (« slicing » en anglais) de volume défini par le fichier STL, ce qui permet de définir chaque tranche de matériau déposée par la tête d'extrusion et d'y associer une trajectoire de déplacement de la tête d'impression. Le découpage est réalisé par un logiciel de type connu en soi, dépendant de l'imprimante, qui de préférence permet également de paramétrer cette dernière en déterminant, notamment, la température des bords de la buse, le taux ou l'angle de remplissage, etc.

L'ensemble des déplacements de la buse et des paramètres machines sont enregistrés dans le fichier d'impression FI, par exemple au format GCode.

L'organigramme de la figure 11B illustre l'algorithme de conception d'une résistance linéaire.

Pour commencer, l'utilisateur fournit en entrée au système informatique la largeur Xmax (EB1) et la longueur Ymax (EB2) de la région, supposée rectangulaire, contenant la résistance, la position du point servant d'origine du repère défini dans cette région (EB3), ainsi que les coordonnées des points de contact A et B de la résistance dans ce repère (EB4, EB5) ; ces points sont généralement situés sur des côtés de cette région rectangulaire, en tout cas cela sera toujours le cas dans la suite. Le système informatique calcule alors la longueur L du segment AB (EB6), puis la section S=ρ·L/R_user nécessaire pour obtenir la résistance voulue (EB7), p étant la résistivité du matériau, extraite de la base BDM.

La section S est le produit de la largeur W de la résistance par son épaisseur H, ces deux grandeurs étant à déterminer. L'épaisseur H de la résistance est un multiple entier de l'épaisseur e d'une tranche de matériau déposée par la tête d'extrusion, tandis que la largeur W est comprise entre une valeur minimale Wmin fonction de la tête d'extrusion et la largeur admissible de la résistance, Wmax. On commence en supposant H=e, et on calcule la largeur correspondante : W=S/H. Si on trouve une valeur supérieure à la largeur maximale admissible Wmax, on incrémente H de la valeur e, et ainsi de suite. Bien que cela ne soit pas illustré sur la figure, il est possible que même avec H=e on obtienne W<Wmax. Cela signifie que R_user est trop élevée ; il faut donc soit augmenter la longueur L en déplaçant l'un des points de contact (ou les deux), soit changer de matériau, soit utiliser une géométrie en zigzag. En principe, cette situation ne devrait pas se présenter si la géométrie linéaire a été sélectionnée automatiquement par l'algorithme de la figure 11A. Ces opérations constituent l'étape EB8.

Ensuite (EB9) on vérifie que la valeur R=RHO·L/S soit bien égale à R_user. Si ce n'est pas le cas, l'utilisateur a la possibilité de changer le matériau utilisé, auquel cas l'algorithme reprend à partir de l'étape EB7 ; s'il ne souhaite pas le faire, le système informatique déplace l'un des points A et B (ou les deux) pour modifier la longueur L jusqu'à ce que R=R_user (EB10).

L'algorithme de conception d'une résistance en zigzag est illustré sur les figures 11C à 11F.

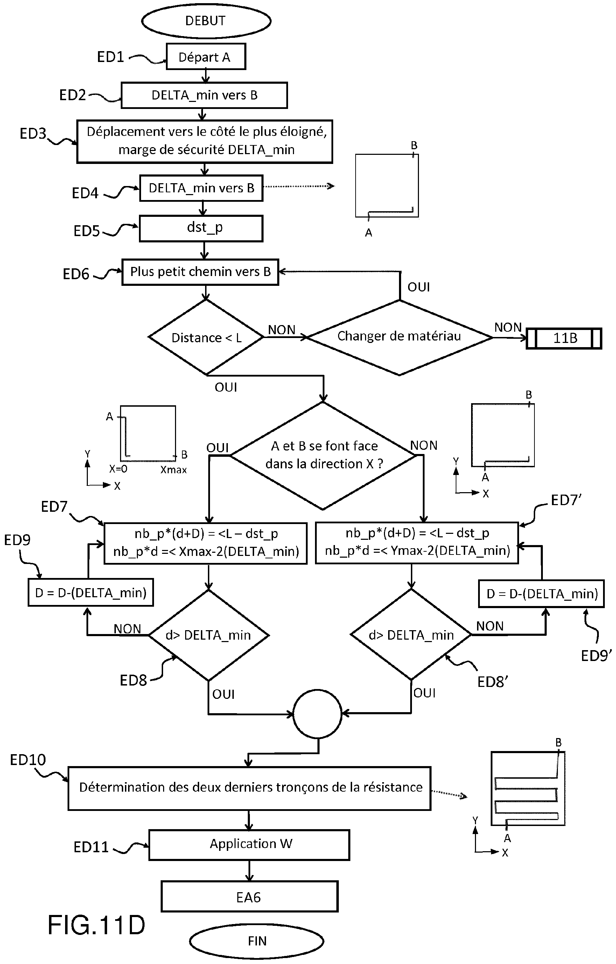

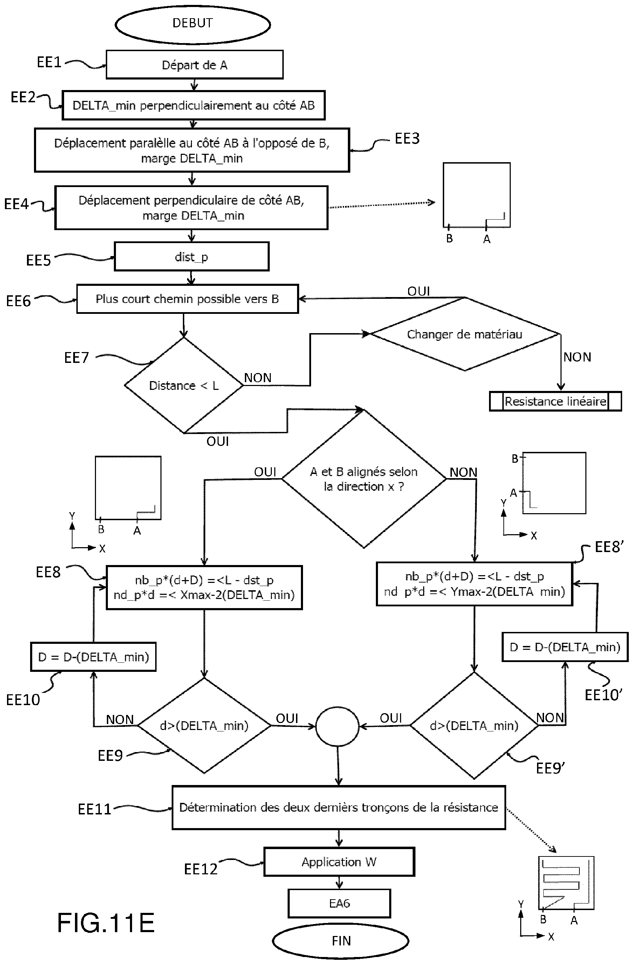

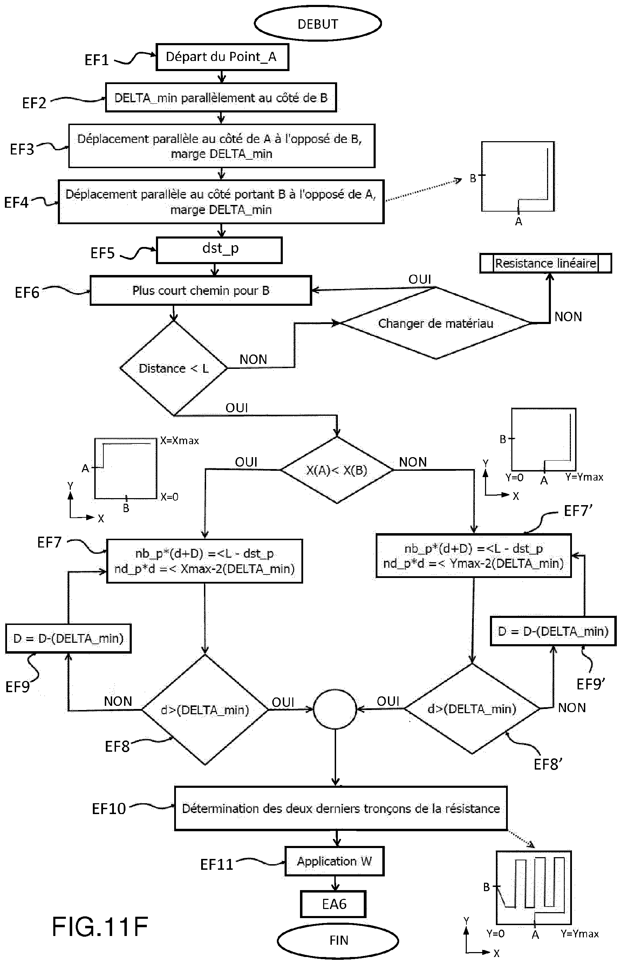

Comme dans le cas de la résistance linéaire, l'utilisateur fournit en entrée au système informatique la largeur Wmax (EC1) et la longueur Ymax (EC2) de la région, supposée rectangulaire, contenant la résistance, ainsi que les coordonnées de l'origine du repère (EC3). Il fournit également la largeur W et l'épaisseur H du « fil » résistif formant le motif en zigzag (EC4, EC5), ce qui permet au système de calculer la longueur de ce fil : L=R_user·W·H/RHO (EC6). Ensuite, l'utilisateur fournit en entrée les coordonnées des points de contact A et B de la résistance (EC7, EC8), ce qui permet au système de déterminer si ces points se trouvent sur des côtés opposés de la région rectangulaire, sur un même côté ou sur des côtés adjacents (et orthogonaux). A ces trois cas de figure correspondent trois algorithmes différents, qui sont illustrés par les figures 11D, 11E et 11F, respectivement.

Lorsque le point B se trouve en face de A (figure 11D), le parcours du fil conducteur est déterminé en partant du point A (étape ED1), en se déplaçant d'un pas prédéfini de longueur DELTA_min (petite par rapport aux dimensions de la région rectangulaire contenant la résistance, mais supérieure à la largeur W du fil) vers le côté où se trouve B et perpendiculairement au côté où se trouve A (ED2). Puis, on se déplace parallèlement au côté de A, dans la direction du sommet de ce côté le plus éloigné de A, en s'arrêtant à une distance DELTA_min du bord de la région rectangulaire, pour garder une marge de sécurité (ED3). Ensuite, on se déplace encore une fois de la longueur DELTA_min vers le côté où se trouve B et perpendiculairement au côté où se trouve A (ED4). La distance parcourue depuis le départ est ensuite mémorisée, et stockée dans une variable dist_p (ED5). A ce point, on calcule la distance minimale qui reste à parcourir, en ligne droite, pour atteindre B (ED6). Si la somme de dist_p et de cette distance minimale dépasse L (calculé à l'étape EC6), cela signifie qu'il n'est pas possible de réaliser une résistance en zigzag de la valeur voulue ; il faut donc changer de matériau. Autrement, le système détermine si les points A et B se font face dans la direction x ou dans la direction y. Dans la suite, on considère seulement le premier cas (étapes ED7, ED8, ED9) ; les opérations effectuées dans le cas opposé sont tout à fait similaires (étapes ED7', ED8', ED9').

La résistance en zigzag est essentiellement constituée d'un certain nombre nb_p de motifs (méandres) formés d'un trait court, d'une longueur d, dans la direction perpendiculaire aux côtés qui portent A et B (direction x, dans l'exemple considéré ici) et d'un trait long, d'une longueur D, dans la direction perpendiculaire, plus deux segments d'extrémité - d'une longueur dist_p du côté de A et d'une longueur à calculer du côté de B. Lors de l'étape ED7, on cherche à résoudre le système :

$$nb\_p \cdot (d+D) \leq L\text{-}dist\_p$$

$$nb\_p \cdot d \leq Xmax\text{-}2 \cdot DELTA\_min$$

en faisant une hypothèse sur la valeur de D (car on a trois inconnues et seulement deux inégalités). L'hypothèse initiale est : D=Ymax-2·DELTA_min.

Lors de l'étape ED8 on vérifie si la solution trouvée vérifie la condition d>DELTA_min. Si ce n'est pas le cas, la valeur de D est décrémentée de DELTA_min (ED9), et l'étape ED7 est exécutée à nouveau.

Le tronçon final est constitué par le plus court chemin qui relie l'extrémité terminale du dernier motif à B (ED10). En général, pour obtenir une longueur totale égale à L, il sera nécessaire d'ajuster la longueur du dernier trait long (avant-dernier tronçon de la résistance, qui ne sera donc pas nécessairement égale à D. Pour construire le volume de la résistance à partir du parcours ainsi déterminé il ne reste alors qu'à appliquer la largeur du fil W (ED11).

Lorsque le point B se trouve sur le même côté que A (figure 11E), le parcours du fil conducteur est déterminé en partant du point A (étape EE1), en se déplaçant d'un pas prédéfini de longueur DELTA_min (petite par rapport aux dimensions de la région rectangulaire contenant la résistance, mais supérieure à la largeur W du fil) dans la direction perpendiculaire au côté où se trouvent les points A et B (EE2). Puis (EE3) on se déplace parallèlement à ce côté et à l'opposé de B, jusqu'à ne laisser qu'une distance de sécurité DELTA_min du côté perpendiculaire à celui de départ. Puis on se déplace encore de la distance DELTA_min dans la direction du premier déplacement, c'est-à-dire perpendiculairement au côté portant A et B (EE4). Les étapes suivantes - EE7, EE8 à EE10, EE8' à EE10', EE11, EE12- sont identiques aux étapes ED6, ED7 à ED9 et ED7' à ED9', ED10 et ED11 décrites plus haut.

Lorsque le point B se trouve sur un côté adjacent, et donc perpendiculaire, à celui qui porte le point A (figure 11F), le parcours du fil conducteur est déterminé en partant du point A (étape EF1), en se déplaçant d'un pas prédéfini de longueur DELTA_min (petite par rapport aux dimensions de la région rectangulaire contenant la résistance, mais supérieure à la largeur W du fil) dans la direction perpendiculaire au côté où se trouve le point A (EF2), puis en se déplaçant parallèlement à ce côté et en direction du côté opposé à celui portant le point B, jusqu'à une distance de sécurité DELTA_min de ce dernier (EF3). Ensuite on se déplace parallèlement à ce côté jusqu'à laisser une distance de sécurité DELTA_min du côté opposé à celui de A (EF4). La suite (étapes EF5 - EF11) est identique aux cas précédents.

Le dernier cas de figure, celui d'une résistance tridimensionnelle, fait l'objet des figures 11G et 11H. Premièrement, l'utilisateur doit définir un volume dans lequel la résistance est définie, les points de départ (A) et d'arrivée (B), ainsi que des points intermédiaires de passage (EG1). Il est important de noter que, dans la technique d'impression tridimensionnelle FDM, un volume se présente sous la forme d'un empilement de couches d'épaisseur prédéfinie. La position d'un point peut donc être définie en identifiant la couche à laquelle il appartient et en donnant ses coordonnées bidimensionnelles à l'intérieur de cette dernière. Pour définir le parcours de la résistance, on part du point A (EG2), on identifie la projection pt_s du point de passage suivant sur la couche contenant A - ou, plus généralement, le point courant pt_c (EG3), et on détermine la distance à parcourir pour atteindre cette projection (EG4), ainsi que la différence de hauteur entre la couche du point courant et celle du point suivant (EG5). La distance L_cs entre les points pt_c et pt_s est la somme de la distance dans le plan, déterminée à l'étape EG3, et de la différence de hauteur (EG6) ; cette distance est mémorisée. Ensuite, on passe au point suivant, et ainsi de suite, jusqu'à parvenir au point B. On calcule alors L_calc, somme des longueurs L_cs (EG7). La connaissance de la résistivité RHO du matériau permet alors de calculer la section S du motif résistif (EG8) ; à partir de la connaissance de cette section, l'épaisseur et la largeur sont calculées comme cela a été expliqué en référence au cas linéaire de la figure 11B (étape EG9). On vérifie alors si la résistance ainsi obtenue, R_calc, a la valeur voulue R_user (EG10). Si R_calc, < R_user, et si l'utilisateur ne souhaite pas changer de matériau, il faut remplacer au moins certains des segments droits reliant deux points de passage successifs à l'intérieur d'une même couche par des zigzags. Pour ce faire, on exprime la longueur de chaque segment intermédiaire en pourcentage de L_calc (EG11), et on lui attribue une résistance à atteindre qui correspond au même pourcentage de R_user (EG 12). On procède alors comme dans le cas de la figure 11D - les étapes EG13 - EG16 correspondent aux étapes ED2 - ED5, les étapes EG17, EG18, EG19 aux étapes ED7 à ED9 et ED7' à ED9' et les étapes ED20, ED21 aux étapes ED10 et ED11.

Un autre exemple de composant électrique pouvant être fabriqué par impression tridimensionnelle conformément à l'invention, et dont la fabrication peut être facilitée par l'utilisation d'une interface de programmation, est une jauge de déformation (ou contrainte) uni-axiale de type piézorésistif.

La variation relative de résistance $\Delta R$ d'un élément piézorésistif présentant une résistance au repos $R_0$ vaut :

$$\Delta R / R_0 = k \cdot \varepsilon$$

où k est la sensibilité piézorésistive et e la déformation, avec $\varepsilon = \Delta L / L_0$, $\Delta L$ étant la variation de longueur et L la longueur au repos de l'élément. Lors de la conception d'un capteur, la longueur (et donc la résistance) initiale est fonction du taux de remplissage du volume du capteur.

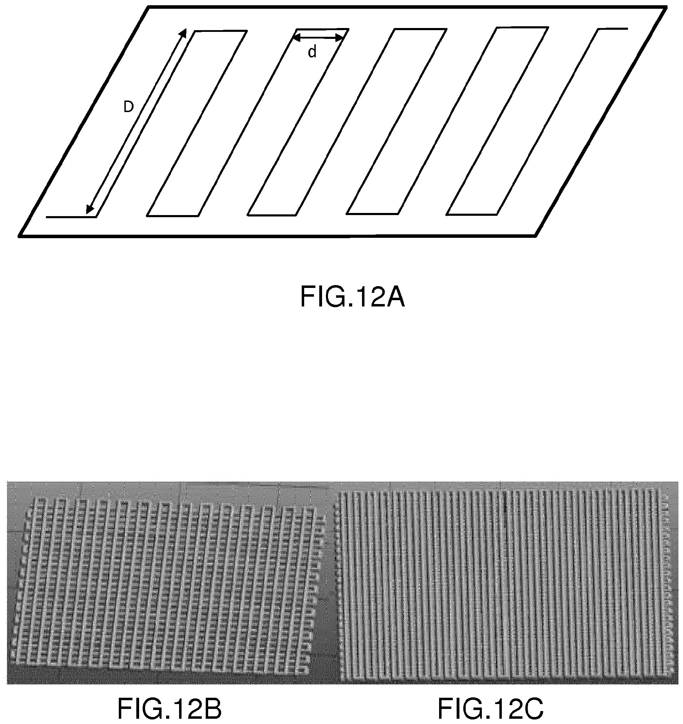

Comme tout élément fabriqué par impression tridimensionnelle FDM, un capteur piézorésistif est formé par des filaments, ou bandes; cette structure est illustrée sur la figure 12A. Le capteur fonctionne par le rapprochement ou l'éloignement des bandes sous l'effet d'une contrainte. En effet si l'on rapproche les bandes l'on crée des microcontacts qui font chuter la résistance. A l'inverse, si l'on éloigne les bandes, l'intensité courant qui circule est plus faible. On comprend que la sensibilité aux déformations est beaucoup plus importante pour les déformations parallèles au petit axe de remplissage, indiqué par d sur la figure 12A, que pour les déformations parallèles au grand axe D.

Si le taux de remplissage est égale à 100%, ce qui signifie que les bandes sont parfaitement jointives et en contact mutuel sur toute leur longueur, les variations de résistance ne seront pas mesurables. Il en ira de même dans le cas d'un taux de remplissage trop faible. De manière empirique il a été constaté que des taux de remplissage de 40 à 70% donnent des résultats tout à fait acceptables pour la plupart des matériaux considérés.

Une comparaison des figures 12A et 12B permet de constater qu'un remplissage à 40% (fig. 12A) implique une longueur de filament plus faible qu'avec un remplissage à 70% (fig. 12B). Dans un capteur avec un taux de remplissage de l'ordre de 70%, la conductivité dépend de manière importante de la percolation du courant, c'est-à-dire de la présence de micro-chemins conducteurs reliant les méandres entre eux. Ces micro-chemins peuvent être facilement interrompus par des faibles déformations de la structure, ce qui fait qu'un capteur ayant un taux de remplissage élevé - mais pas trop, par exemple de l'ordre de 70% - sera capable de détecter de plus petites déformations qu'un capteur avec un taux de remplissage de seulement 40%. Cependant, un tel capteur sera aussi plus sensible aux défauts de fabrication, par exemple, courts-circuits provoqués par une tête d'extrusion sale. A noter que, dans les exemples des figures 12A et 12B, plusieurs couches de matériau résistif ont été déposées, avec des angles de dépôt perpendiculaires, ce qui conduit à une sensibilité piézorésistive isotrope.

L'organigramme de la figure 13 illustre les étapes de conception d'un capteur de contrainte piézorésistif. Tout d'abord (étape EP1)

L'utilisateur réalise la forme qu'il souhaite sur un logiciel de CAO et l'importe en format STL (maillage avec des triangles du volume). Ensuite, afin d'être sûr que le capteur sera suffisamment souple et résistant, on fixe sa hauteur H à une valeur prédéfinie, par exemple trois fois l'épaisseur d'impression e (EP2).

La dernière couche servira de capteur. Les autres couches peuvent par exemple être réalisées en matériau isolant avec un remplissage fixe, généralement compris entre 60 et 100% et par exemple égal à 70%, de manière à laisser plus ou moins de souplesse au capteur (EP3). En variante, des couches conductrices ou résistives présentant une autre fonction peuvent également être présentes au-dessous de celle servant de capteur de contrainte.

Sur la couche du capteur, l'utilisateur définit la position des électrodes (EP4) et choisi le matériau résistif, parmi une liste qui lui est proposée (EP5), ainsi que la sensibilité voulue - également parmi une liste de valeurs possibles (EP6). Le remplissage se fait généralement en mode rectiligne (EP7), avec une direction principale de remplissage perpendiculaire à l'axe défini par les deux électrodes (EP8).

Un tableau, construit lors d'une étape préalable d'étalonnage et enregistré dans une mémoire de l'ordinateur exécutant le procédé, permet de trouver le taux de remplissage permettant d'atteindre la sensibilité voulue, étant donné le matériau choisi et la géométrie voulue (EP9).

La vitesse d'impression (EP10) peut être déterminée en fonction du taux de remplissage également déterminé, typiquement au moyen d'un autre tableau de correspondance construit par étalonnage. Par exemple, on peut choisir une vitesse d'impression faible pour des taux de remplissage importants afin d'éviter les courts-circuits qui peuvent se produire lorsque des résidus de filament restent collés à la buse et se décollent de manière impromptue durant l'impression. Pour des taux de remplissage plus faibles, l'écartement des lignes de passage, et donc l'absence de matière dans le passage de la buse, suffit généralement à éviter qu'un résidu vienne se coller ; on peut donc imprimer à une vitesse plus élevée, par exemple de 60 mm/s. En variante, on peut utiliser une vitesse d'impression relativement faible (par exemple 30 mm/s) indépendamment du taux de remplissage.

L'invention a été décrite en référence à des systèmes mécatroniques comportant des capteurs piézorésistifs. Cependant, l'invention n'est pas limitée à ce cas de figure. Il est en effet possible, en particulier en choisissant de manière opportune les charges contenues dans la matrice thermoplastique, d'imprimer par FLM des matériaux sensibles à la température, à la lumière, aux agents chimiques, etc. de manière à obtenir des capteurs thermiques, optiques, chimiques, respectivement. Par ailleurs, à partir de matériaux conducteurs et isolant, il est possible de fabriquer des capteurs capacitifs ou inductifs, et des antennes utilisables en émission et/ou en réception. Il est également possible de réaliser des actionneurs thermiques, électrostatiques, magnétiques (en utilisant des charges ferromagnétiques) ou même piézoélectriques. Il est également possible d'imprimer des OLED (diodes électroluminescentes organiques) et/ou des cellules photovoltaïques organiques.

Dans certains cas, l'invention permettra la réalisation d'un système mécatronique entièrement imprimé. Dans d'autres cas, seule une partie du sous-ensemble électrique/électronique d'un tel système sera imprimée (capteurs, lignes conductrices, actionneurs...) tandis que d'autres composants - par exemple des circuits intégrés réalisant des fonctions électroniques complexes, pourront être rapportés. Même dans ce dernier cas, l'invention permet de réduire le nombre d'opérations d'assemblage, et donc de rendre la fabrication du système mécatronique plus rapide et moins onéreuse.

Références

[Coiai, 2015] Serena Coiai et. Al, « Nanocomposites Based on Thermoplastic Polymers and Functional Nanofiller for Sensor Applications », Materials, vol. 8, pages 3377-3427, 2015.

[Deng, 2014] Hua Deng et al., « Progress on the morphological control of conductive network in conductive polymer composites and the use as electroactive multifunctional materials », Progress in Polymer Science, vol 39, pages 627-655, 2014.

[Muth, 2014] Joseph T. Muth et al., « Embedded 3D Printing of Strain Sensors within Highly Stretchable Elastomers », Advanced Materials, vol 26, pages 6307-6312, 2014.

[Sitthi-Amorn, 2015] Pitchaya Sitthi-Amorn et al. « MultiFab: A Machine Vision Assisted Platform for Multi-material 3D Printing » ACM Transactions on Graphics (SIGGRAPH 2015).

[Rossiter, 2009] Jonathan Rossiter et al. « Printing 3D dielectric elastomer actuators for soft robotics » Proc. of SPIE Vol. 7287, 72870H (2009).

[Leigh, 2012] Simon J. Leigh et al. "A Simple, Low-Cost Conductive Composite Material for 3D Printing of Electronic Sensors" , PLOS ONE, Vol. 7, Issuer 11, e49365 (Nov. 2012).

[O'Brien, 2015] Jonathan O'Brien et al. « Miniaturization of Microwave Components and Antennas Using 3D Manufacturing »9th European Conférence on Antennas and Propagation (EuCAP), Lisbonne, 13-17 mai 2015.

## Revendications

1. Procédé de fabrication d'un système mécatronique comprenant :

   - une étape de fabrication d'une structure mécanique (SM) par impression tridimensionnelle par dépôt de fil fondu d'au moins un premier matériau (M1) électriquement isolant ; et
   - une étape de fabrication d'au moins un composant électrique (CE) en contact avec au moins un élément de ladite structure mécanique et solidaire avec elle ;

   ladite étape de fabrication d'au moins un composant électrique est mise en œuvre par impression tridimensionnelle par dépôt de fil fondu d'au moins un deuxième matériau (M2), conducteur ou résistif, directement en contact dudit élément de la structure mécanique, **caractérisé en ce que** ledit ou un dit composant électrique est un transducteur (JC1, JC2),
   le procédé comportant également une étape de recuit local mise en œuvre pendant ou après le dépôt d'une couche du premier ou du deuxième matériau, en correspondance dudit dépôt.

2. Procédé selon la revendication 1 dans lequel ledit transducteur (JC1, JC2) est un capteur piézorésistif.

3. Procédé selon l'une des revendications précédentes dans lequel ledit deuxième matériau, conducteur ou résistif, comprend des charges conductrices (CM2) dispersées dans une matrice isolante thermoplastique (MM2).

4. Procédé selon l'une des revendications précédentes comportant également une étape de dépôt d'un agent promoteur d'adhésion (APA) sur une surface du système mécatronique en cours de fabrication avant le dépôt, au-dessus de ladite surface, d'une couche en un matériau différent.

5. Procédé selon l'une des revendications précédentes comprenant l'utilisation d'au moins deux têtes d'extrusion (TE1, TE2) distinctes pour le dépôt du premier et du deuxième matériau.

6. Procédé selon l'une des revendications précédentes comprenant également une étape de génération d'un fichier d'impression (FI) pour la réalisation d'au moins un dit composant électrique, ladite étape étant mise en œuvre par ordinateur et comprenant :

   - une sous-étape consistant à fournir audit ordinateur des données indicatives d'une position d'un ou plusieurs points de contact, d'une région spatiale où ledit composant doit être fabriqué et d'au moins une propriété électrique dudit composant ;
   - une sous-étape de calcul d'une géométrie dudit composant par application auxdites données d'un modèle mathématique prédéfini ; et
   - une sous-étape de génération dudit fichier d'impression permettant de réaliser ladite géométrie par impression tridimensionnelle par dépôt de fil fondu dudit ou d'au moins un dit deuxième matériau, conducteur ou résistif.

7. Appareil pour la mise en œuvre d'un procédé selon l'une des revendications 1 à 6 comprenant une imprimante tridimensionnelle (I3D) du type par dépôt de fil fondu présentant au moins deux têtes d'extrusion distinctes (TE1, TE2), activables de manière indépendante et adaptées pour déposer deux matériaux différents, lesdites têtes d'extrusion étant agencées côte à côte avec une même direction d'extrusion et étant portées par un même chariot d'impression (CI) assurant leur déplacement simultané, la tête d'impression comportant également un mécanisme (ATV) pour déplacer une tête d'extrusion inactive dans une direction opposée à ladite direction d'extrusion lorsque ladite ou une autre dite tête d'extrusion est active, **caractérisé en ce que** ledit chariot d'impression est équipé d'un capteur capacitif (CC) configuré pour mesurer sa distance d'une surface d'impression et **en ce que** l'appareil comprend également un générateur (SRR) d'un faisceau de rayonnement électromagnétique, ledit générateur étant configuré pour produire un échauffement local d'un matériau déposé sur une surface d'impression de ladite imprimante tridimensionnelle.

8. Appareil selon la revendication 7 comprenant également un plateau d'impression (PLI) au-dessus duquel se déplace ledit chariot d'impression, ledit plateau étant équipé d'électrodes métalliques (EET1, EET2) susceptibles d'être détectées par ledit capteur capacitif, moyennant quoi ledit capteur permet un étalonnage de la position du chariot d'impression par rapport au plateau.

9. Appareil selon l'une des revendications 7 à 80, équipé de :

- une camera (CE) configurée pour acquérir une image d'une couche de matériau déposé par l'imprimante tridimensionnelle ;
- un système de traitement d'images (STI) configuré pour comparer ladite image avec un modèle tridimensionnel stocké dans une mémoire informatique et en déduire une erreur de position dudit chariot d'impression ; et
- un système informatique de pilotage (SIP) dudit chariot configuré pour corriger ladite erreur de position lors du dépôt d'une couche successive de matériau.

10. Appareil selon l'une des revendications 7 à 9 comprenant également un système informatique (SGF) de génération d'un fichier d'impression (FI) pour piloter ladite imprimante tridimensionnelle de manière à fabriquer un composant électrique, ledit système informatique étant configuré pour :

- recevoir en entrée des données indicatives d'une position d'un ou plusieurs points de contact, d'une région spatiale où ledit composant doit être fabriqué et d'au moins une propriété électrique dudit composant ;
- calculer une géométrie dudit composant par application auxdites données d'un modèle mathématique prédéfini ; et
- générer un fichier d'impression permettant de réaliser ladite géométrie par impression tridimensionnelle par dépôt de fil fondu d'au moins un matériau conducteur ou résistif.


## Patentansprüche

1. Verfahren zum Herstellen eines mechatronischen Systems, das Folgendes beinhaltet:

- einen Schritt des Herstellens einer mechanischen Struktur (SM) durch dreidimensionales Drucken durch Absetzen von geschmolzenem Draht aus mindestens einem ersten elektrisch isolierenden Material (M1); und
- einen Schritt des Herstellens mindestens einer elektrischen Komponente (CE), die in Kontakt und einstückig mit mindestens einem Element der mechanischen Struktur ist;

wobei der Schritt des Herstellens mindestens einer elektrischen Komponente durch dreidimensionales Drucken durch Absetzen von geschmolzenem Draht aus mindestens einem zweiten Material (M2), das leitfähig oder resistiv ist, direkt in Kontakt mit dem Element der mechanischen Struktur durchgeführt wird, **dadurch gekennzeichnet, dass** die oder eine elektrische Komponente ein Wandler (JC1, JC2) ist, wobei das Verfahren ferner einen lokalen Glühschritt beinhaltet, der bei oder nach dem Absetzen einer Schicht des ersten oder zweiten Materials durchgeführt wird, entsprechend dem Absetzen.

2. Verfahren nach Anspruch 1, bei dem der Wandler (JC1, JC2) ein piezoresistiver Sensor ist.

3. Verfahren nach einem der vorherigen Ansprüche, bei dem das zweite Material, das leitfähig oder resistiv ist, leitende Ladungen (CM2) umfasst, die in einer thermoplastischen Isolationsmatrix (MM2) dispergiert sind.

4. Verfahren nach einem der vorherigen Ansprüche, das ferner einen Schritt des Absetzens eines Haftvermittlers (APA) auf einer Oberfläche des mechatronischen Systems im Laufe der Herstellung vor dem Absetzen, über der Oberfläche, einer Schicht aus einem anderen Material beinhaltet.

5. Verfahren nach einem der vorherigen Ansprüche, das die Verwendung von mindestens zwei separaten Extrusionsköpfen (TE1, TE2) für das Absetzen des ersten und zweiten Materials beinhaltet.

6. Verfahren nach einem der vorherigen Ansprüche, das ferner einen Schritt des Erzeugens einer Druckdatei (FI) zum Herstellen mindestens einer elektrischen Komponente beinhaltet, wobei der Schritt von einem Computer durchgeführt wird und Folgendes beinhaltet:

   - einen Teilschritt, der darin besteht, dem Computer Daten zuführen, die eine Position von einem oder mehreren Kontaktpunkten, einer räumlichen Region, in der die Komponente hergestellt werden soll, und von mindestens einer elektrischen Eigenschaft der Komponente anzeigen;
   - einen Teilschritt des Berechnens einer Geometrie der Komponente durch Anwenden eines vordefinierten mathematischen Modells auf die Daten; und
   - einen Teilschritt des Erzeugens der Druckdatei, die es zulässt, die Geometrie durch dreidimensionales Drucken durch Absetzen von geschmolzenem Draht aus dem oder mindestens einem zweiten Material, das leitfähig oder resistiv ist, zu realisieren.

7. Vorrichtung zum Durchführen eines Verfahrens nach einem der Ansprüche 1 bis 6, die einen dreidimensionalen Drucker (I3D) des Typs zum Absetzen von geschmolzenem Draht umfasst, der mindestens zwei separate Extrusionsköpfe (TE1, TE2) aufweist, die auf unabhängige Weise aktivierbar sind, und die zum Absetzen von zwei unterschiedlichen Materialien ausgelegt sind, wobei die Druckköpfe Seite an Seite mit einer selben Extrusionsrichtung angeordnet sind und von einem selben Druckschlitten (CI) angetrieben werden, der ihre gleichzeitige Bewegung gewährleistet, wobei der Druckkopf ferner einen Mechanismus (ATV) zum Bewegen eines inaktiven Extrusionskopfs in einer Richtung entgegengesetzt zur Extrusionsrichtung umfasst, wenn der oder ein anderer Extrusionskopf aktiv ist, **dadurch gekennzeichnet, dass** der Druckschlitten mit einem kapazitiven Sensor (CC), der zum Messen seines Abstands von einer Druckfläche konfiguriert ist, ausgestattet ist und dadurch, dass die Vorrichtung ferner einen Generator (SRR) für einen Strahl elektromagnetischer Strahlung umfasst, wobei der Generator zum Produzieren einer lokalen Erhitzung eines auf eine Druckfläche des dreidimensionalen Druckers abgesetzten Materials konfiguriert ist.

8. Vorrichtung nach Anspruch 7, die ferner eine Druckplatte (PLI) umfasst, über der sich der Druckschlitten bewegt, wobei die Platte mit Metallelektroden (EET1, EET2) ausgestattet ist, die von dem kapazitiven Sensor detektiert werden können, mittels derer der Sensor eine Kalibrierung der Position des Druckschlittens in Bezug auf die Platte zulässt.

9. Vorrichtung nach einem der Ansprüche 7 bis 8, ausgestattet mit:

   - einer Kamera (CE), die zum Erfassen eines Bildes einer von dem dreidimensionalen Drucker abgesetzten Materialschicht konfiguriert ist;
   - einem Bildverarbeitungssystem (STI), das zum Vergleichen des Bildes mit einem dreidimensionalen Modell, das in einem Computerspeicher gespeichert ist, konfiguriert ist und um davon einen Positionsfehler des Druckschlittens abzuleiten; und
   - einem Steuerungscomputersystem (SIP) des Schlittens, das zum Korrigieren des Positionsfehlers beim Absetzen einer nachfolgenden Materialschicht konfiguriert ist.

10. Vorrichtung nach einem der Ansprüche 7 bis 9, die ferner ein Computersystem (SGF) zum Erzeugen einer Druckdatei (FI) zum Steuern des dreidimensionalen Druckers auf eine solche Weise umfasst, dass eine elektrische Komponente hergestellt wird, wobei das Computersystem konfiguriert ist zum:

   - Empfangen von Daten am Eingang, die eine Position von einem oder mehreren Kontaktpunkten, einer räumlichen Region, in der die Komponente hergestellt werden soll, und mindestens einer elektrischen Eigenschaft der Komponente anzeigen;
   - Berechnen einer Geometrie der Komponente durch Anwenden eines vordefinierten mathematischen Modells auf die Daten; und
   - Erzeugen einer Druckdatei, die es zulässt, die Geometrie durch dreidimensionales Drucken durch Absetzen von geschmolzenem Draht aus mindestens einem leitfähigen oder resistiven Material zu realisieren.

**Claims**

1. Method for manufacturing a mechatronic system comprising:

   - a step of manufacturing a mechanical structure (SM) by three-dimensional printing by fused filament deposition of at least one first electrically insulating material (M1); and
   - a step of manufacturing at least one electrical component (CE) in contact with at least one element of said mechanical structure and secured therewith;

   in which said step of manufacturing at least one electrical component is implemented by three-dimensional printing by fused filament deposition of at least one second material (M2), conductive or resistive, directly in contact with said element of the mechanical structure, **characterized in that** said or one said electrical component is a transducer (JC1, JC2),
   the method also comprising a local annealing step implemented during or after the deposition of a layer of the first material or of the second material, matching said deposition.

2. Method according to claim 1, in which said transducer (JC1, JC2) is a piezoresistive sensor.

3. Method according to one of the preceding claims, in which said second material, conductive or resistive, comprises conductive fillers (CM2) dispersed in a thermoplastic insulating matrix (MM2).

4. Method according to one of the preceding claims, also comprising a step of deposition of an adhesion-promoting agent (APA) on a surface of the mechatronic system during manufacture before the deposition, over said surface, of a layer of a different material.

5. Method according to one of the preceding claims, comprising the use of at least two distinctive extrusion heads (TE1, TE2) for the deposition of the first material and of the second material.

6. Method according to one of the preceding claims, also comprising a step of generation of a print file (FI) for the production of at least one said electrical component, said step being implemented by computer and comprising:

   - a substep consisting in providing said computer with the data indicative of a position of one or more contact points, of a spatial region where said component must be manufactured and of at least one electrical property of said component;
   - a substep of computation of a geometry of said component by application to said data of a predefined mathematical model; and
   - a substep of generation of said print file making it possible to produce said geometry by three-dimensional printing by fused filament deposition of said or of at least one said second material, conductive or resistive.

7. Apparatus for implementing a method according to one of claims 1 to 6, comprising a three-dimensional printer (I3D) of the fused filament deposition type having at least two distinct extrusion heads (TE1, TE2), that can be activated independently and adapted to deposit two different materials, said extrusion heads being arranged side-by-side with the same direction of extrusion and being borne by the same printing carriage (CI) ensuring their simultaneous displacement, the print head also comprising a mechanism (ATV) for displacing an inactive extrusion head in a direction away from said direction of extrusion when said or one other said extrusion head is active, **characterized in that** said printing carriage is equipped with a capacitive sensor (CC) configured to measure its distance from a print surface and **in that** the apparatus also comprises a generator (SRR) of a beam of electromagnetic radiation, said generator being configured to produce a local heating of a material deposited on a print surface of said three-dimensional printer.

8. Apparatus according to claim 7, also comprising a print platen (PLI) over which said printing carriage is displaced, said platen being equipped with metal electrodes (EET1, EET2) that can be detected by said capacitive sensor, whereby said sensor allows a calibration of the position of the printing carriage relative to the platen.

9. Apparatus according to one of claims 7 to 8, equipped with:

- a camera (CE) configured to acquire an image of a layer of material deposited by the three-dimensional printer;
- an image processing system (STI) configured to compare said image with a three-dimensional model stored in a computer memory and deduced therefrom an error of position of said printing carriage; and
- a computer driving system (SIP) for said carriage configured to correct said position error upon the deposition of a successive layer of material.

10. Apparatus according to one of claims 7 to 9, also comprising a computer system (SGF) for generating a print file (FI) to drive said three-dimensional printer so as to manufacture an electrical component, said computer system being configured to:

- receive as input data indicative of a position of one or more contact points, of a spatial region where said component must be manufactured and of at least one electrical property of said component;
- compute a geometry of said component by application to said data of a predefined mathematical model; and
- generate a print file making it possible to produce said geometry by three-dimensional printing by fused filament deposition of at least one conductive or resistive material.

FIG.1

FIG.2A

FIG.2B

FIG.2C

FIG.3

FIG.4A          FIG.4B

FIG.4C

FIG.4D          FIG.4E

FIG.5A

FIG.5B

FIG.5C

FIG.6A

FIG.6B

FIG.7A

FIG.7B

FIG.7C

FIG.8

FIG.9A

FIG.9B

FIG.9C

FIG.9D

FIG.9E

FIG.9F

FIG.10

FIG.11A

DEBUT

EB1 — Xmax

EB2 — Ymax

EB3 — origine

EB4 — Coordonnées A

EB5 — Coordonnées B

EB6 — Calcul L

$S = (RHO) * L / R\_user$ — EB7

EB8

$W = S/H \;;\; H = e$

$H < - H+e$

$W > X\_max$

NON

Vérification — EB9

EB10 — NON — CHANGER DE MATERIAIU ? — NON — R = R\_user

OUI

OUI

Déplacer A ou B

EA6 ...

FIN

FIG.11B

DEBUT

EC1 — Xmax

EC2 — Ymax

EC3 — origine

EC4 — W

EC5 — H

EC6 — L=R*W*H/(RHO)

EC7 — Coordonnées A

EC8 — Coordonnées B

A et B sont sur deux côtés opposés ?  → OUI → 11D

NON

A et B sont sur le même côté ?  → OUI → 11E

NON → 11G

FIN

FIG.11C

DEBUT

ED1 — Départ A

ED2 — DELTA_min vers B

ED3 — Déplacement vers le côté le plus éloigné, marge de sécurité DELTA_min

ED4 — DELTA_min vers B

ED5 — dst_p

ED6 — Plus petit chemin vers B

Distance < L — NON → Changer de matériau — NON → 11B

OUI ↑ (Changer de matériau)

OUI (Distance < L)

A et B se font face dans la direction X ?

OUI — NON

ED7 — $nb\_p*(d+D) = <L - dst\_p$
$nb\_p*d =< Xmax-2(DELTA\_min)$

ED7' — $nb\_p*(d+D) = <L - dst\_p$
$nb\_p*d =< Ymax-2(DELTA\_min)$

ED9 — D = D-(DELTA_min)

ED9' — D = D-(DELTA_min)

ED8 — d> DELTA_min — NON

ED8' — d> DELTA_min — NON

OUI — OUI

ED10 — Détermination des deux derniers tronçons de la résistance

ED11 — Application W

EA6

FIN

FIG.11D

X=0   Xmax

Y → X

DEBUT

EE1 — Départ de A

EE2 — DELTA_min perpendiculairement au côté AB

EE3 — Déplacement paralèlle au côté AB à l'opposé de B, marge DELTA_min

EE4 — Déplacement perpendiculaire de côté AB, marge DELTA_min

B    A

EE5 — dist_p

EE6 — Plus court chemin possible vers B ← OUI

Changer de matériau

NON

EE7 — Distance < L — NON

Resistance linéaire

OUI

A et B alignés selon la direction x ?

OUI                    NON

Y
↑
└→ X
B    A

B
A
Y
↑
└→ X

EE8 — $nb\_p*(d+D) =< L - dst\_p$
$nd\_p*d =< Xmax-2(DELTA\_min)$

EE8' — $nb\_p*(d+D) =< L - dst\_p$
$nd\_p*d =< Ymax-2(DELTA\_min)$

$D = D-(DELTA\_min)$

EE10

EE10' — $D = D-(DELTA\_min)$

EE9 — NON ← d>(DELTA_min) — OUI → ○ ← OUI — d>(DELTA_min) — NON — EE9'

EE11 — Détermination des deux dernièrs tronçons de la résistance

EE12 — Application W

EA6

Y
↑
└→ X
B    A

FIG.11E

FIN

DEBUT

EF1 — Départ du Point_A

EF2 — DELTA_min parallèlement au côté de B

EF3 — Déplacement parallèle au côté de A à l'opposé de B, marge DELTA_min

EF4 — Déplacement parallèle au côté portant B à l'opposé de A, marge DELTA_min

B ⌐
     └┐
A

EF5 — dst_p

Resistance linéaire

EF6 — Plus court chemin pour B ← OUI — Changer de matériau — NON

Distance < L — NON

X=Xmax
A ⌐
   │
Y
   X=0
B
X

OUI

X(A) < X(B) — NON

B ⌐
   └┐
Y      A
Y=0    Y=Ymax
X

EF7 —
$nb\_p*(d+D) =< L - dst\_p$
$nd\_p*d =< Xmax-2(DELTA\_min)$

EF7' —
$nb\_p*(d+D) =< L - dst\_p$
$nd\_p*d =< Ymax-2(DELTA\_min)$

D = D-(DELTA_min)

D = D-(DELTA_min)

EF9

EF9'

NON — d>(DELTA_min) — OUI ○ OUI — d>(DELTA_min) — NON

EF8

EF8'

EF10 — Détermination des deux derniers tronçons de la résistance

EF11 — Application W

B ⌐
   │ ⊓ ⊓
   └┘ └┘
Y
Y=0    A    Y=Ymax
X

EA6

FIG.11F

FIN

DEBUT

EG1 — A, B, points intermédiaires, volume

EG2 — Départ de A

EG3 — Projection pt_s sur le plan de pt_c

EG4 — Distance pt_c - projeté de pt_s

EG5 — Diff.hauteur projeté de pt_s et pt_s

EG6 — Distance pt_c - pt_s

L_cs

Dernier point

NON → Passer au point suivant

OUI

EG7 — $\Sigma$ L_cs

EG8 — S= (RHO)*L/R_user

EG9 — W=S/H

W>Xmax → OUI → H = H+e

NON

EG10 — Vérification

R_calc différent de R_user → OUI → Changer Matériau → NON

OUI

NON

FIG.11G

EG11 — %L_calc

EG12 — Pour chaque segment :

EG13 — %R_user : %L_calc*L_user

%L_calc = %L_user

NON

OUI

EG14 — ED2

EG15 — ED3

EG16 — ED4

EG17 — ED5

EG18 — ED7 ← EG20

EG19 — ED8 — NON → ED9

OUI

Mémoriser la ligne

EG21 — ED10

EG22 — ED11

Mémoriser la trajectoire

Point de fin atteint ? — NON → Passer au point suivant

OUI

EA6

FIN

FIG.11H

FIG.12A

FIG.12B                    FIG.12C

DEBUT

EP1 — Modèle CAO de la surface

EP2 — Modification de l'épaisseur
H=3e

Dernière couche ?

OUI

NON

EP4 — Définition de la position des électrodes

EP5 — Définition du matériau pour le capteur

Choix de la sensibilité dans la liste proposée

EP6

Remplissage :
Mode rectiligne

EP7

Définition du matériau support

Taux de remplissage (ex : 70%)

Mémorisation

Passage à la couche suivante

EP3

EP8 — Angle de remplissage :
D'orthogonal à l'axe défini par les électrodes

EP9 — Taux de remplissage :
Défini par rapport à la sensibilité voulue et à la géométrie

EP10 — Vitesse d'impression

EA6

FIN

# FIG.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014328964 A
- US 2015173203 A
- WO 2014209994 A
- US 20100021580 A1
- WO 2015130401 A

**Littérature non-brevet citée dans la description**

- **SERENA COIAI.** Nanocomposites Based on Thermoplastic Polymers and Functional Nanofiller for Sensor Applications. *Materials,* 2015, vol. 8, 3377-3427
- **HUA DENG et al.** Progress on the morphological control of conductive network in conductive polymer composites and the use as electroactive multifunctional materials. *Progress in Polymer Science,* 2014, vol. 39, 627-655
- **JOSEPH T. MUTH et al.** Embedded 3D Printing of Strain Sensors within Highly Stretchable Elastomers. *Advanced Materials,* 2014, vol. 26, 6307-6312
- **PITCHAYA SITTHI-AMORN et al.** MultiFab: A Machine Vision Assisted Platform for Multi-material 3D Printing. *ACM Transactions on Graphics (SIGGRAPH,* 2015
- **JONATHAN ROSSITER et al.** Printing 3D dielectric elastomer actuators for soft robotics. *Proc. of SPIE,* 2009, vol. 7287, 72870H
- **SIMON J. LEIGH et al.** A Simple, Low-Cost Conductive Composite Material for 3D Printing of Electronic Sensors. *PLOS ONE,* Novembre 2012, vol. 7 (11), e49365
- **JONATHAN O'BRIEN et al.** Miniaturization of Microwave Components and Antennas Using 3D Manufacturing. *9th European Conférence on Antennas and Propagation (EuCAP),* 13 Mai 2015